(19) Europäisches Patentamt
European Patent Office
Office européen des brevets

(11) EP 3 762 238 B1

(12) EUROPEAN PATENT SPECIFICATION

(45) Date of publication and mention of the grant of the patent:
**26.01.2022 Bulletin 2022/04**

(21) Application number: **18923767.0**

(22) Date of filing: **28.06.2018**

(51) International Patent Classification (IPC):
***B41J 3/407*** *(2006.01)* ***B41J 2/01*** *(2006.01)*
***C09D 11/30*** *(2014.01)* ***C09D 11/322*** *(2014.01)*
***C09D 11/54*** *(2014.01)* ***C09D 11/102*** *(2014.01)*
***D06P 5/30*** *(2006.01)* ***D06P 1/52*** *(2006.01)*
***C09D 11/10*** *(2014.01)* ***B41M 5/00*** *(2006.01)*
***D06P 1/44*** *(2006.01)* ***D06P 1/642*** *(2006.01)*
***C09D 11/38*** *(2014.01)* ***D06P 1/673*** *(2006.01)*

(52) Cooperative Patent Classification (CPC):
**C09D 11/30; C09D 11/10; C09D 11/322; C09D 11/38; C09D 11/54; D06P 1/445; D06P 1/6424; D06P 1/6735; D06P 5/30;**
B41M 5/0017; B41M 5/0047; B41M 5/0064

(86) International application number:
**PCT/US2018/040008**

(87) International publication number:
**WO 2020/005253 (02.01.2020 Gazette 2020/01)**

(54) **INKJET PRE-TREATMENT FLUID FOR TEXTILE PRINTING**

TINTENSTRAHLVORBEHANDLUNGSFLÜSSIGKEIT FÜR DEN TEXTILDRUCK

FLUIDE DE PRÉ-TRAITEMENT PAR JET D'ENCRE POUR IMPRESSION TEXTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.01.2021 Bulletin 2021/02**

(73) Proprietor: **Hewlett-Packard Development Company, L.P.**
**Spring TX 77389 (US)**

(72) Inventors:
- **GUO, Dennis Z.**
  **San Diego, California 92127-1899 (US)**
- **ZHENG, Jie**
  **San Diego, California 92127-1899 (US)**

(74) Representative: **Beccarelli, Sandra Béatrice Yvonne**
**IP Section**
**Hewlett-Packard Limited**
**IP Section**
**HP Inc UK Limited**
**One Redcliff Street**
**Bristol, BS1 6NP (GB)**

(56) References cited:
**EP-A1- 2 933 374**
**WO-A1-2014/039306**
**US-A1- 2016 032 523**
**US-B2- 9 278 515**
**US-B2- 9 644 315**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

BACKGROUND

Textile printing methods often include rotary and/or flat-screen printing. Traditional analog printing typically involves the creation of a plate or a screen, i.e., an actual physical image from which ink is transferred to the textile. Both rotary and flat screen printing have great volume throughput capacity, but also have limitations on the maximum image size that can be printed. For large images, pattern repeats are used. Conversely, digital inkjet printing enables greater flexibility in the printing process, where images of any desirable size can be printed immediately from an electronic image without pattern repeats. Inkjet printers are gaining acceptance for digital textile printing. Inkjet printing is a non-impact printing method that utilizes electronic signals to control and direct droplets or a stream of ink to be deposited on media.

BRIEF DESCRIPTION OF THE DRAWINGS

Features of examples of the present disclosure will become apparent by reference to the following detailed description and drawings.

Fig. 1 is a flow diagram illustrating an example of a printing method;
Fig. 2 is a schematic diagram of an example of a printing system;
Fig. 3A is a black and white reproduction of an originally colored photograph of a textile swatch printed without a pre-treatment fluid and with a yellow pigment inkjet ink and a black pigment inkjet ink, showing black to yellow bleed; and
Fig. 3B is a black and white reproduction of an originally colored photograph of a textile swatch printed with an example of a pre-treatment fluid and with a yellow pigment inkjet ink and a black pigment inkjet ink, showing improved black to yellow bleed.

DETAILED DESCRIPTION

Examples of the pre-treatment fluid disclosed herein can be applied digitally, via a thermal inkjet printer or a piezoelectric inkjet printer in order to prepare a textile substrate for the subsequent direct application of a pigmented inkjet ink. The pre-treatment fluid may be applied digitally, which avoids the use of spray nozzles, roll-coating, cylindrical pad printing, or other analog techniques. It has been found that the pre-treatment fluid disclosed herein improves the image quality of the resulting printed textile, e.g., in terms of higher optical density and reduced color bleed, and improves the washfastness of the printed textile (e.g., when compared to prints formed on similar textile substrates without the pre-treatment fluid disclosed herein).

Referring now to Fig. 1, the printing method 100 comprises:

inkjet printing an inkjet pre-treatment fluid onto a textile substrate, the inkjet pre-treatment fluid including: a fixing agent including a multivalent metal cation, a blocked polyisocyanate selected from the group consisting of a non-ionic blocked polyisocyanate, a cationic blocked polyisocyanate, and an anionic blocked polyisocyanate having an acid number less than 5 mg KOH/g, and a liquid vehicle (as shown at reference numeral 102);
inkjet printing an inkjet ink onto the printed inkjet pre-treatment fluid to form an ink layer on the textile substrate, the inkjet ink including a pigment (as shown at reference numeral 104); and
curing the ink layer on the textile substrate (as shown at reference numeral 106).

The curing of the ink layer on the textile substrate renders the image printed thereon durable, wash-resistant, and colorfast.

In an example, the curing of the ink layer on the textile substrate is accomplished at a temperature ranging from about 80°C to about 200°C, for a period of time ranging from about 30 seconds to about 15 minutes.

In further examples, the curing of the ink layer on the textile substrate is accomplished at a temperature ranging from about 80°C to about 190°C; or from about 90°C to about 165°C; or from about 120°C to about 160°C; or from about 140°C to about 150°C. In further examples, the time period during which the curing of the ink layer on the textile substrate takes place ranges from about 25 seconds to about 18 minutes; or from about 45 seconds to about 12 minutes; or from about 50 seconds to about 9 minutes; or from about 1 minute to about 3 minutes. In a further example, the curing of the ink layer on the textile substrate is accomplished at a temperature of about 150°C, for about 3 minutes.

Curing may also be performed with or without the application of pressure.

It is to be understood that this curing temperature range for the textile fabric 33 may vary, depending upon,

e.g., the fixation temperature of the selected inkjet ink and the type of fabrics. For example, if the fixation temperature of a selected ink were 150°C, the curing temperature may be any suitable temperature at, or above, or slightly above (e.g., + 5 °C) 150°C. The curing time may also vary depending on the curing temperature. Shorter time may be used if curing takes place at a higher temperature, and longer time may be used if curing takes place at a lower temperature.

In a further example of the method 100, the inkjet ink is printed onto the printed inkjet pre-treatment fluid while the pre-treatment fluid is wet. Wet on wet printing may be desirable because less pre-treatment fluid may be applied during this process (as compared to when the pre-treatment fluid is dried prior to ink application), and because the printing workflow may be simplified without the additional drying. In an example of wet on wet printing, the inkjet ink is printed onto the printed inkjet pre-treatment fluid within a period of time ranging from about 0.01 second to about 30 seconds after the printed inkjet pre-treatment fluid is printed. In further examples, the inkjet ink is printed onto the printed inkjet pre-treatment fluid within a period of time ranging from about 0.1 second to about 20 seconds; or from about 0.2 second to about 10 seconds; or from about 0.2 second to about 5 seconds after the printed inkjet pre-treatment fluid is printed.

In yet a further example, the printed inkjet pre-treatment fluid may be dried on the textile substrate, and the inkjet ink may be printed onto the textile substrate having the dried inkjet pre-treatment fluid thereon. It is to be understood that in this example, the textile substrate having the inkjet pre-treatment fluid printed thereon may be dried in any suitable manner, e.g., it may be air dried (e.g., at a temperature ranging from about 20°C to about 80°C for 30 seconds to 5 minutes), it may be exposed to electromagnetic radiation (e.g. infra-red (IR) radiation for 5 seconds), and/or the like.

In a further example of the method 100, a ratio of pre-treatment fluid printed to inkjet ink printed ranges from about 1:20 by volume to about 1:1 by volume. In further examples, the ratio of pre-treatment fluid printed to inkjet ink printed ranges from about 1:15 by volume to about 1:2 by volume; or from about 1:10 by volume to about 1:3 by volume; or from about 1:7 by volume to about 1:5 by volume. In an example, the ratio of pre-treatment fluid printed to inkjet ink printed is about 1:4 by volume.

A liquid fluid set for inkjet printing onto a textile substrate comprises:

an inkjet pre-treatment fluid 26, including: a fixing agent including a multivalent metal cation; a blocked polyisocyanate selected from the group consisting of a non-ionic blocked polyisocyanate, a cationic blocked polyisocyanate, and an anionic blocked polyisocyanate having an acid number less than 5 mg KOH/g; and a liquid vehicle for the pre-treatment fluid; and

an inkjet ink 24, including: a pigment dispersion; a polymeric binder; and a liquid vehicle for the inkjet ink.

Referring now to Fig. 2, a schematic diagram of a printing system 30 includes an inkjet printer 32 in a printing zone 34 of the printing system 30 and a heater/dryer 36 positioned in a fixation zone 38 of the printing system 30.

In an example, a textile fabric/substrate 33 may be transported (e.g., by a platen 28) through the printing system 30 along the path shown by the arrows in Fig. 2 such that the textile substrate 33 is first fed to the printing zone 34 where an example of a pre-treatment fluid 26 is inkjet printed directly onto the textile substrate 33 by the inkjet printer 32 (for example, from a piezo- or thermal-inkjet printhead). In an example, the printing of the pre-treatment fluid 26 forms a pre-treated area on the textile substrate 33. Then a pigmented inkjet ink 24 is also inkjet printed, over the pre-treatment fluid 26 onto the textile substrate 33 (e.g., onto the pre-treated area) to form an ink layer on the textile substrate 33. The textile substrate 33 having the pre-treatment fluid 26 and the ink layer disposed thereon may then be transported to the curing/fixation zone 38 where the ink layer is cured, e.g., by exposure to heat 44. The curing/fixation zone 38 may include a clam shell hot press, an oven, or a conveyer dryer. In an example, the exposing to heat accomplishes curing/fixation of the inkjet ink 24 onto the textile fabric 33, to form a printed image 37. The curing/fixation of the ink 24 (causing it to bind onto the textile substrate 33) forms a printed article 40 including the image 37 formed on the textile substrate 33.

An example of the printing method 100 further comprises maintaining the pre-treatment fluid 26 separate from the inkjet ink 24 until they are inkjet printed.

In some examples, the heater/dryer 36 may be positioned to apply heat 44 to the textile substrate 33 immediately after the pre-treatment fluid 26/ink 24 has been applied thereto. In the example shown in Fig. 2, the heater/dryer 36 is disposed in the curing/fixation zone 38, which allows for printing and curing in a single pass. In an example, the heater/dryer 36 may be moved or scanned across the printed image 37 in the curing/fixation zone 38. In another example, the heater/dryer 36 may be in a fixed position with respect to the textile substrate 33. The heater/dryer 36 may be a conductive heater or a radiative heater that is part of, and/or connected to the printing system 30. These types of heaters may be placed below the textile substrate 33 or may also or alternatively be placed above the textile substrate 33.

In the examples disclosed herein, printing of the pre-treatment fluid 26 and of the ink 24 may be accomplished without warming/pre-heating the textile substrate 33. As such, printing of the fluids may be accomplished at room temperature (e.g., about 18°C to about 25°C), and then drying or drying and curing may be accomplished at the elevated temperatures disclosed herein. In an example, if the amount of time and the temperature at which the fabric 33 having the pre-treatment fluid 26 and ink 24 thereon is cured is enough to fix the ink 24 onto the fabric 33, warming may not be

performed.

Another example of the printing method 100 further comprises warming the textile fabric 33 having the pre-treatment fluid 26 and the ink 24 thereon at a temperature below a fixation temperature of the inkjet ink 24: i) before the curing; or ii) concurrently with the curing; or iii) both before and concurrently with the curing. It is to be understood that the warming may be accomplished by exposing to electromagnetic radiation. The source of electromagnetic radiation may be infrared (IR) or near-infrared (NIR, near-IR) light sources, such as IR or near-IR curing lamps, lasers with the desirable IR or near-IR electromagnetic wavelengths, or any combination thereof.

In an example of the printing method 100, the temperature at which the textile fabric 33 is warmed ranges from about 60°C to about 100°C. In another example, the temperature at which the textile fabric 33 is warmed ranges from about 70°C to about 90°C. It is to be understood that this warming temperature range may vary, depending upon, e.g., the fixation temperature of the selected inkjet ink. For example, if the fixation temperature of a selected ink were 160°C, the warming temperature may be any suitable temperature below 160°C.

In an example of the printing method 100, the warming takes place for an amount of time ranging from about 0.1 seconds to about 30 seconds. In another example, the warming takes place for an amount of time ranging from about 3 seconds to about 18 seconds. In yet another example, the warming takes place for an amount of time ranging from about 1 second to about 5 seconds. It is to be understood that this warming time range may vary, depending upon, e.g., the temperature at which warming takes place. For example, if the warming temperature is at a higher end of a range, the time for warming may be at a lower end of a range.

***Pre-treatment Fluids***

In the method 100 and the system 30 disclosed herein, and as mentioned above, an inkjet pre-treatment fluid 26 is used.

The inkjet pre-treatment fluid 26 for textile printing comprises:

a fixing agent including a multivalent metal cation; a blocked polyisocyanate selected from the group consisting of a non-ionic blocked polyisocyanate, a cationic blocked polyisocyanate, and an anionic blocked polyisocyanate having an acid number less than 5 mg KOH/g; and a liquid vehicle.

In an example, the blocked polyisocyanate is a blocked polydiisocyanate. In a further example, non-ionic blocked polydiisocyanates are used. In yet a further example, cationic blocked polydiisocyanates are used (e.g., a blocked polydiisocyanate dispersed by cationic groups).

In an example, the multivalent metal cation is selected from the group consisting of calcium cations, magnesium cations, zinc cations, iron cations, aluminum cations, and combinations thereof. In a further example, the fixing agent comprises a metal salt and further includes anions selected from the group consisting of chloride anions, iodide anions, bromide anions, nitrate anions, carboxylate anions, sulfonate anions, sulfate anions, and combinations thereof.

It is to be understood that the metal salt (containing the multivalent metal cation) may be present in any suitable amount. In an example, the metal salt is present in an amount ranging from about 2 wt% to about 15 wt% based on a total weight of the pre-treatment fluid. In further examples, the metal salt is present in an amount ranging from about 4 wt% to about 12 wt%; or from about 5 wt% to about 11 wt%; or from about 6 wt% to about 10 wt%, based on a total weight of the pre-treatment fluid.

In an example of the inkjet pre-treatment fluid 26, the blocked polyisocyanate is present in an amount ranging from about 0.2 wt% to about 15 wt% based on a total weight of the pre-treatment fluid. In further examples, the blocked polyisocyanate is present in an amount ranging from about 1 wt% to about 10 wt%; or from about 1.5 wt% to about 5 wt%; or from about 2 wt% to about 3 wt%, based on a total weight of the pre-treatment fluid.

In an example of the inkjet pre-treatment fluid 26, the blocked polyisocyanate includes blocking groups selected from the group consisting of phenols, ε-caprolactam, butanone oxime, diethyl malonate, secondary amines, 1,2,4-triazoles, pyrazoles, and combinations thereof. Butanone oxime is also known as methyl ethyl ketoxime. An example of a suitable pyrazole is 3,5-dimethyl pyrazole.

The term "blocked polyisocyanate" refers to compounds with multiple isocyanate groups where a plurality of the isocyanate groups are coupled to a chemical moiety that stabilizes the isocyanate groups in the inkjet pre-treatment fluid 26 so that they remain available for reaction after printing on the textile fabric 33. The chemical moiety that prevents the isocyanate groups from reacting can be referred to herein as a "blocking group." To convert the blocked polyisocyanate to a reactive species, the blocking group can be dissociated from isocyanate groups to result in a "deblocked polyisocyanate." Deblocking can occur by heating the blocked polyisocyanate to a temperature where deblocking or dissociation can occur, e.g., typically at from 100°C to 200°C. There may be deblocking or dissociation temperatures outside of this range, e.g., at lower temperatures.

In an example, the blocked polyisocyanate is non-ionic and has an acid number ranging from 0 mg KOH/g up to 1 mg KOH/g. In one example, the non-ionic blocked polyisocyanate can include a blocked polyisocyanate trimer. The blocked polyisocyanate trimer can have the structure shown in Formula I, as follows:

$(NCO)_3R_3(NHCO)_3(BL)_{3-x}(DL)_x$ Formula I

where R can independently include a C2 to C10 branched or straight-chained alkyl, C6 to C20 alicyclic, C6 to C20 aromatic, or a combination thereof; BL can include a blocking group such as a phenol blocking group, a lactam blocking group, an oxime blocking group, a pyrazole blocking group, or a combination thereof; x can be from greater than 0 to 1; and DL can include a non-ionic hydrophilic dispersing group, such as a polyethylene oxide group, a polypropylene oxide group, or a combination thereof. In one example, R can be from C4 to C8 alkyl and BL can be a dimethyl pyrazole. An example of a blocked polyisocyanate that can be used is Matsui FIXER™ WF-N (a 3,5-dimethyl pyrazole non-ionic blocked polyisocyanate commercially available from Matsui Shikiso Chemical (Japan)). Another example of a non-ionic blocked polyisocyanate that can be used is TRIXENE® Aqua BI 220 from Lanxess Chemical (Germany).

In another example, the blocked polyisocyanate is cationic and does not have an acid number. One example of a cationic blocked polyisocyanate that can be used is VESTANAT® EP-DS 1076 (an acetoneoxime blocked polyisocyanate based on isophorone diisocyanate commercially available from Evonik Industries (Germany)).

The blocked polyisocyanate is an anionic blocked polyisocyanate having an acid number less than about 5 mg KOH/g. In these examples, anionic groups disperse the blocked polyisocyanates but are present in a small number so that the acid number of the anionic blocked polyisocyanate is less than about 5 mg KOH/g. In another example, the blocked polyisocyanate is the anionic blocked polyisocyanate, and the acid number is less than about 3 mg KOH/g. Anionic blocked polyisocyanates having an acid number more than 5 mg KOH/g are not suitable for the example pre-treatment fluids disclosed herein. Some examples of anionic dispersing groups include carboxylates or sulfonates.

As used herein, the term "acid number" refers to the mass of potassium hydroxide (KOH) in milligrams that is used to neutralize one (1) gram of a particular substance. For example, with respect to the non-ionic or anionic blocked polyisocyanate, the term "acid number" refers to the mass of potassium hydroxide (KOH) in milligrams that is used to neutralize one gram of the non-ionic or anionic blocked polyisocyanate. To determine this acid number, a known amount of a sample of the non-ionic or anionic blocked polyisocyanate may be dispersed in water and the aqueous dispersion may be titrated with a polyelectrolyte titrant of a known concentration. In this example, a current detector for colloidal charge measurement may be used. An example of a current detector is the Mütek PCD-05 Smart Particle Charge Detector (available from BTG). The current detector measures colloidal substances in an aqueous sample by detecting the streaming potential as the sample is titrated with the polyelectrolyte titrant to the point of zero charge. An example of a suitable polyelectrolyte titrant is poly(diallyldimethylammonium chloride) (i.e., PolyDADMAC).

In an example of the inkjet pre-treatment fluid 26, the liquid vehicle includes water and a co-solvent. Examples of suitable co-solvents for the inkjet pre-treatment fluid 26 are water soluble or water miscible co-solvents that may be selected from the group consisting of glycerol, ethoxylated glycerol (also known as glycereth-26, commercially available as LIPONIC® EG-1 (or LEG-1) from Lipo Chemicals), 2-methyl-1,3-propanediol, trimethylolpropane, 1,2-propanediol, dipropylene glycol, and combinations thereof. Other suitable examples of co-solvents include polyhydric alcohols or simple carbohydrates (e.g., trehalose).

Further examples of the pre-treatment fluid 26 co-solvent(s) may include alcohols (e.g., diols), ketones, ketoalcohols, ethers (e.g., the cyclic ether tetrahydrofuran (THF), and others, such as thiodiglycol, sulfolane, 2-pyrrolidone, 1-(2-hydroxyethyl)-2-pyrrolidone,1,3-dimethyl-2-imidazolidinone and caprolactam; glycols such as ethylene glycol, diethylene glycol, triethylene glycol, tetraethylene glycol, propylene glycol, dipropylene glycol, tripropylene glycol, trimethylene glycol, butylene glycol, and hexylene glycol; addition polymers of oxyethylene or oxypropylene such as polyethylene glycol, polypropylene glycol and the like; triols such as glycerol (as mentioned above) and 1,2,6-hexanetriol; lower alkyl ethers of polyhydric alcohols, such as ethylene glycol monomethyl ether, ethylene glycol monoethyl ether, diethylene glycol monomethyl, and diethylene glycol monoethyl ether; and lower dialkyl ethers of polyhydric alcohols, such as diethylene glycol dimethyl or diethyl ether.

Whether used alone or in combination, the total amount of the co-solvent(s) may be present in the inkjet pre-treatment fluid 26 in an amount ranging from about 5 wt% to about 25 wt% based on a total weight of the inkjet pre-treatment fluid, for use in a thermal inkjet printhead. In another example, the total amount of the co-solvent(s) may be present in the inkjet pre-treatment fluid 26 in an amount ranging from about 10 wt% to about 18 wt% based on a total weight of the inkjet pre-treatment fluid, for use in a thermal inkjet printhead. The co-solvent amount may be increased to increase the viscosity of the pre-treatment fluid for a high viscosity piezoelectric printhead.

It is to be understood that water is present in addition to the co-solvent(s) and makes up a balance of the inkjet pre-treatment fluid 26. As such, the weight percentage of the water present in the inkjet pre-treatment fluid 26 will depend, in part, upon the weight percentages of the other components. The water may be purified water or deionized water.

An example of the inkjet pre-treatment fluid 26 further comprises an additive selected from the group consisting of a surfactant, a chelating agent, a buffer, a biocide, and combinations thereof.

Examples of the inkjet pre-treatment fluid 26 further include a surfactant. The surfactant may be any surfactant that aids in wetting, but that does not deleteriously interact with the blocked polyisocyanate. As such, in an example,

the surfactant in the inkjet pre-treatment fluid is selected from the group consisting of a non-ionic surfactant, a cationic surfactant, and a zwitterionic surfactant. The amount of the surfactant that may be present in the inkjet pre-treatment fluid is 2 wt% or less (with the lower limit being above 0) based on the total weight of the inkjet pre-treatment fluid. In some examples, the amount of the surfactant ranges from about 0.1 wt% to about 1 wt% based on the total weight of the inkjet pre-treatment fluid.

Examples of suitable non-ionic surfactants include non-ionic fluorosurfactants, non-ionic acetylenic diol surfactants, non-ionic ethoxylated alcohol surfactants, and combinations thereof. Several commercially available non-ionic surfactants that can be used in the formulation of the inkjet pre-treatment fluid include ethoxylated alcohols/secondary alcohol ethoxylates such as those from the TERGITOL® series (e.g., TERGITOL® 15-S-30, TERGITOL® 15-S-9, TERGITOL® 15-S-7), manufactured by Dow Chemical; surfactants from the SURFYNOL® series (e.g., SURFYNOL® SE-F (i.e., a self-emulsifiable wetting agent based on acetylenic diol chemistry), SURFYNOL® 440 and SURFYNOL® 465 (i.e., ethoxylated 2,4,7,9-tetramethyl 5 decyn-4,7-diol)) manufactured by Evonik Industries, and the DYNOL™ series (e.g., DYNOL™ 607 and DYNOL™ 604) manufactured by Air Products and Chemicals, Inc.; fluorinated surfactants, such as those from the ZONYL® family (e.g., ZONYL® FSO and ZONYL® FSN surfactants), manufactured by E.I. DuPont de Nemours and Company; alkoxylated surfactants such as TEGO® Wet 510 manufactured from Evonik; fluorinated POLYFOX® non-ionic surfactants (e.g., PF159 non-ionic surfactants), manufactured by Omnova; or combinations thereof.

Examples of suitable cationic surfactants that may be used in the inkjet pre-treatment fluid include long chain amines and/or their salts, acrylated diamines, polyamines and/or their salts, quaternary ammonium salts, polyoxyethylenated long-chain amines, quaternized polyoxyethylenated long-chain amines, and/or combinations thereof.

Examples of suitable zwitterionic (amphoteric) surfactants that may be used in the inkjet pre-treatment fluid include coco-betaine, alkyl isothionates, N,N-dimethyl-N-dodecylamine oxide, N,N-dimethyl-N-tetradecyl amine oxide (i.e., myristamine oxide), N,N-dimethyl-N-hexadecyl amine oxide, N,N-dimethyl-N-octadecyl amine oxide, N,N-dimethyl-N-(Z-9-octadecenyl)-N-amine oxide, N-dodecyl-N,N-dimethyl glycine, lecithins, phospatidylethanolamine, phosphatidylcholine, and phosphatidylserine.

The chelating agent is another example of an additive that may be included in the inkjet pre-treatment fluid 26. When included, the chelating agent is present in an amount greater than 0 wt% actives and less than or equal to 0.5 wt% actives based on the total weight of the pre-treatment fluid. In an example, the chelating agent is present in an amount ranging from about 0.05 wt% actives to about 0.2 wt% actives based on the total weight of the pre-treatment fluid. The wt% actives of the chelating agent accounts for the loading (as a weight percent) of the active chelator/chelating agent present in the pre-treatment fluid, and does not account for the weight of other components of the chelating agent solution (e.g., water) in the pre-treatment fluid.

Throughout this disclosure, a weight percentage that is referred to as "wt% actives" refers to the loading of an active component of a dispersion or other formulation that is present in the inkjet pre-treatment fluid or the pigmented inkjet ink. For example, the wt% actives of the chelating agent accounts for the loading (as a weight percent) of the active chelating agent solids present in the inkjet pre-treatment fluid and does not account for the weight of the other components (e.g., water, etc.) of a dispersion (which includes the chelating agent) in the inkjet pre-treatment fluid. The term "wt%," without the term actives, refers to the loading of a 100% active component that does not include other non-active components therein.

In an example, the chelating agent is selected from the group consisting of methylglycinediacetic acid, trisodium salt; 4,5-dihydroxy-1,3-benzenedisulfonic acid disodium salt monohydrate; ethylenediaminetetraacetic acid (EDTA); hexamethylenediamine tetra(methylene phosphonic acid), potassium salt; and combinations thereof. Methylglycinediacetic acid, trisodium salt (Na3MGDA) is commercially available as TRILON® M from BASF Corp. 4,5-dihydroxy-1,3-benzenedisulfonic acid disodium salt monohydrate is commercially available as TIRON™ monohydrate. Hexamethylenediamine tetra(methylene phosphonic acid), potassium salt is commercially available as DEQUEST® 2054 from Italmatch Chemicals.

Buffers are another example of an additive that may be included in the inkjet pre-treatment fluid 26. In an example, the total amount of buffer(s) in the inkjet pre-treatment fluid ranges from 0 wt% to about 0.5 wt% (with respect to the weight of pre-treatment fluid). In another example, the total amount of buffer(s) in the ink is about 0.1 wt% (with respect to the weight of pre-treatment fluid). Examples of some suitable buffers include TRIS (tris(hydroxymethyl)aminomethane or Trizma), bis-tris propane, TES (2-[(2-Hydroxy-1,1-bis(hydroxymethyl)ethyl)amino]ethanesulfonic acid), MES (2-ethanesulfonic acid), MOPS (3-(N-morpholino)propanesulfonic acid), HEPES (4-(2-hydroxyethyl)-1-piperazineethanesulfonic acid), DIPSO (3-(N,N-Bis[2-hydroxyethyl]amino)-2-hydroxypropanesulfonic acid), Tricine (N-[tris(hydroxymethyl)methyl]glycine), HEPPSO (β-Hydroxy-4-(2-hydroxyethyl)-1-piperazinepropanesulfonic acid monohydrate), POPSO (Piperazine-1,4-bis(2-hydroxypropanesulfonic acid) dihydrate), EPPS (4-(2-Hydroxyethyl)-1-piperazinepropanesulfonic acid, 4-(2-Hydroxyethyl)piperazine-1 -propanesulfonic acid), TEA (triethanolamine buffer solution), Gly-Gly (Diglycine), bicine (N,N-Bis(2-hydroxyethyl)glycine), HEPBS (N-(2-Hydroxyethyl)piperazine-N'-(4-butanesulfonic acid)), TAPS ([tris(hydroxymethyl)methylamino]propanesulfonic acid), AMPD (2-amino-2-methyl-1,3-propanediol), TABS (N-tris(Hydroxymethyl)methyl-4-aminobutanesulfonic acid), or the like.

Biocides are another example of an additive that may be included in the inkjet pre-treatment fluid 26. In an example, the total amount of biocide(s) in the pre-treatment fluid ranges from about 0 wt% actives to about 0.5 wt% actives (with respect to the weight of the pre-treatment fluid). In another example, the total amount of biocide(s) in the inkjet ink composition is about 0.001 wt% actives to about 0.1 wt% actives (with respect to the weight of the pre-treatment fluid). The wt% actives of the biocide accounts for the loading (as a weight percent) of the active biocidal agent present in the pre-treatment fluid, and does not account for the weight of other components of the biocide (e.g., water) in the pre-treatment fluid.

Examples of suitable biocides include the NUOSEPT® (Ashland Inc.), UCARCIDE™ or KORDEK™ or ROCIMA™ (Dow Chemical Co.), PROXEL® (Arch Chemicals) series, ACTICIDE® B20 and ACTICIDE® M20 and ACTICIDE® MBL (blends of 2-methyl-4-isothiazolin-3-one (MIT), 1,2-benzisothiazolin-3-one (BIT) and Bronopol) (Thor Chemicals), AXIDE™ (Planet Chemical), NIPACIDE™ (Clariant), blends of 5-chloro-2-methyl-4-isothiazolin-3-one (CIT or CMIT) and MIT under the tradename KATHON™ (Dow Chemical Co.), and combinations thereof.

The pH of the inkjet pre-treatment fluid 26 can be less than 7. In some examples, the pH ranges from pH 1 to pH 7, from pH 3 to pH 7, from pH 4.5 to pH 7, etc.

In an example, the inkjet pre-treatment fluid 26 consists of the listed components and no additional components (such as water soluble polymers, water repellent agents, etc.). In other examples, the inkjet pre-treatment fluid 26 comprises the listed components, and other components that do not deleteriously affect the jettability of the fluid via a thermal- or piezoelectric inkjet printhead may be added.

Examples of the inkjet pre-treatment fluid 26 disclosed herein may be used in a thermal inkjet printer or in a piezoelectric printer to pre-treat a textile substrate. The viscosity of the pre-treatment fluid may be adjusted for the type of printhead that is to be used, and the viscosity may be adjusted by adjusting the co-solvent level and/or adding a viscosity modifier. When used in a thermal inkjet printer, the viscosity of the pre-treatment fluid may be modified to range from about 1 centipoise (cP) to about 5 cP (at 20°C to 25°C), and when used in a piezoelectric printer, the viscosity of the pre-treatment fluid may be modified to range from about 2 cP to about 16 cP (at 20°C to 25°C), depending on the viscosity of the printhead that is being used (e.g., low viscosity printheads, medium viscosity printheads, or high viscosity printheads).

***Textile Fabrics***

In an example of printing method 100 (and for use in the system 30), the textile fabric 33 is selected from the group consisting of polyester fabrics, polyester blend fabrics, cotton fabrics, cotton blend fabrics, nylon fabrics, nylon blend fabrics, silk fabrics, silk blend fabrics, and combinations thereof. In a further example, textile fabric 33 is selected from the group consisting of cotton fabrics and cotton blend fabrics.

It is to be understood that organic textile fabrics and/or inorganic textile fabrics may be used for the textile fabric 33. Some types of fabrics that can be used include various fabrics of natural and/or synthetic fibers. It is to be understood that the polyester fabrics may be a polyester coated surface. The polyester blend fabrics may be blends of polyester and other materials (e.g., cotton, linen, etc.). In another example, the textile fabric 33 may be selected from nylons (polyamides) or other synthetic fabrics.

Example natural fiber fabrics that can be used include treated or untreated natural fabric textile substrates, e.g., wool, cotton, silk, linen, jute, flax, hemp, rayon fibers, thermoplastic aliphatic polymeric fibers derived from renewable resources (e.g. cornstarch, tapioca products, sugarcanes), etc. Example synthetic fibers used in the textile fabric/substrate can include polymeric fibers such as nylon fibers, polyvinyl chloride (PVC) fibers, PVC-free fibers made of polyester, polyamide, polyimide, polyacrylic, polypropylene, polyethylene, polyurethane, polystyrene, polyaramid (e.g., Kevlar®) polytetrafluoroethylene (Teflon®) (both trademarks of E.I. du Pont de Nemours and Company, Delaware), fiberglass, polytrimethylene, polycarbonate, polyethylene terephthalate, polyester terephthalate, polybutylene terephthalate, or a combination thereof. In some examples, the fiber can be a modified fiber from the above-listed polymers. The term "modified fiber" refers to one or both of the polymeric fiber and the fabric as a whole having undergone a chemical or physical process such as, but not limited to, copolymerization with monomers of other polymers, a chemical grafting reaction to contact a chemical functional group with one or both the polymeric fiber and a surface of the fabric, a plasma treatment, a solvent treatment, acid etching, or a biological treatment, an enzyme treatment, or antimicrobial treatment to prevent biological degradation.

It is to be understood that the terms "textile fabric" or "fabric substrate" do not include materials commonly known as any kind of paper (even though paper can include multiple types of natural and synthetic fibers or mixtures of both types of fibers). Fabric substrates can include textiles in filament form, textiles in the form of fabric material, or textiles in the form of fabric that has been crafted into finished articles (e.g., clothing, blankets, tablecloths, napkins, towels, bedding material, curtains, carpet, handbags, shoes, banners, signs, flags, etc.). In some examples, the fabric substrate can have a woven, knitted, non-woven, or tufted fabric structure. In one example, the fabric substrate can be a woven fabric where warp yarns and weft yarns can be mutually positioned at an angle of about 90°. This woven fabric

can include fabric with a plain weave structure, fabric with twill weave structure where the twill weave produces diagonal lines on a face of the fabric, or a satin weave. In another example, the fabric substrate can be a knitted fabric with a loop structure. The loop structure can be a warp-knit fabric, a weft-knit fabric, or a combination thereof. A warp-knit fabric refers to every loop in a fabric structure that can be formed from a separate yarn mainly introduced in a longitudinal fabric direction. A weft-knit fabric refers to loops of one row of fabric that can be formed from the same yarn. In a further example, the fabric substrate can be a non-woven fabric. For example, the non-woven fabric can be a flexible fabric that can include a plurality of fibers or filaments that are one or both bonded together and interlocked together by a chemical treatment process (e.g., a solvent treatment), a mechanical treatment process (e.g., embossing), a thermal treatment process, or a combination of multiple processes.

***Pigmented Inkjet Inks***

The inkjet pre-treatment fluid may be directly applied to a textile fabric prior to the application of a pigmented inkjet ink. Examples of suitable pigmented inkjet inks that may be used with the inkjet pre-treatment fluid will now be described.

Any suitable pigmented inkjet ink may be used in the examples disclosed herein. The inkjet formulation may include a pigment dispersion, a polymeric binder (i.e., binder resin), and a liquid vehicle.

*Pigment Dispersion*

The pigment dispersion may include a pigment and a separate dispersant, or may include a self-dispersed pigment. Whether separately dispersed or self-dispersed, the pigment can be any of a number of primary or secondary colors, or black or white. As specific examples, the pigment may be any color, including, as examples, a cyan pigment, a magenta pigment, a yellow pigment, a black pigment, a violet pigment, a green pigment, a brown pigment, an orange pigment, a purple pigment, a white pigment, or combinations thereof.

*Pigments and separate dispersants*

Examples of the inkjet ink may include a pigment that is not self-dispersing and a separate dispersant. Examples of these pigments, as well as suitable dispersants for these pigments will now be described.

Examples of suitable blue or cyan organic pigments include C.I. Pigment Blue 1, C.I. Pigment Blue 2, C.I. Pigment Blue 3, C.I. Pigment Blue 15, Pigment Blue 15:3, C.I. Pigment Blue 15:4, C.I. Pigment Blue 16, C.I. Pigment Blue 18, C.I. Pigment Blue 22, C.I. Pigment Blue 25, C.I. Pigment Blue 60, C.I. Pigment Blue 65, C.I. Pigment Blue 66, C.I. Vat Blue 4, and C.I. Vat Blue 60.

Examples of suitable magenta, red, or violet organic pigments include C.I. Pigment Red 1, C.I. Pigment Red 2, C.I. Pigment Red 3, C.I. Pigment Red 4, C.I. Pigment Red 5, C.I. Pigment Red 6, C.I. Pigment Red 7, C.I. Pigment Red 8, C.I. Pigment Red 9, C.I. Pigment Red 10, C.I. Pigment Red 11, C.I. Pigment Red 12, C.I. Pigment Red 14, C.I. Pigment Red 15, C.I. Pigment Red 16, C.I. Pigment Red 17, C.I. Pigment Red 18, C.I. Pigment Red 19, C.I. Pigment Red 21, C.I. Pigment Red 22, C.I. Pigment Red 23, C.I. Pigment Red 30, C.I. Pigment Red 31, C.I. Pigment Red 32, C.I. Pigment Red 37, C.I. Pigment Red 38, C.I. Pigment Red 40, C.I. Pigment Red 41, C.I. Pigment Red 42, C.I. Pigment Red 48(Ca), C.I. Pigment Red 48(Mn), C.I. Pigment Red 57(Ca), C.I. Pigment Red 57:1, C.I. Pigment Red 88, C.I. Pigment Red 112, C.I. Pigment Red 114, C.I. Pigment Red 122, C.I. Pigment Red 123, C.I. Pigment Red 144, C.I. Pigment Red 146, C.I. Pigment Red 149, C.I. Pigment Red 150, C.I. Pigment Red 166, C.I. Pigment Red 168, C.I. Pigment Red 170, C.I. Pigment Red 171, C.I. Pigment Red 175, C.I. Pigment Red 176, C.I. Pigment Red 177, C.I. Pigment Red 178, C.I. Pigment Red 179, C.I. Pigment Red 184, C.I. Pigment Red 185, C.I. Pigment Red 187, C.I. Pigment Red 202, C.I. Pigment Red 209, C.I. Pigment Red 219, C.I. Pigment Red 224, C.I. Pigment Red 245, C.I. Pigment Red 286, C.I. Pigment Violet 19, C.I. Pigment Violet 23, C.I. Pigment Violet 32, C.I. Pigment Violet 33, C.I. Pigment Violet 36, C.I. Pigment Violet 38, C.I. Pigment Violet 43, and C.I. Pigment Violet 50. Any quinacridone pigment or a co-crystal of quinacridone pigments may be used for magenta inks.

Examples of suitable yellow organic pigments include C.I. Pigment Yellow 1, C.I. Pigment Yellow 2, C.I. Pigment Yellow 3, C.I. Pigment Yellow 4, C.I. Pigment Yellow 5, C.I. Pigment Yellow 6, C.I. Pigment Yellow 7, C.I. Pigment Yellow 10, C.I. Pigment Yellow 11, C.I. Pigment Yellow 12, C.I. Pigment Yellow 13, C.I. Pigment Yellow 14, C.I. Pigment Yellow 16, C.I. Pigment Yellow 17, C.I. Pigment Yellow 24, C.I. Pigment Yellow 34, C.I. Pigment Yellow 35, C.I. Pigment Yellow 37, C.I. Pigment Yellow 53, C.I. Pigment Yellow 55, C.I. Pigment Yellow 65, C.I. Pigment Yellow 73, C.I. Pigment Yellow 74, C.I. Pigment Yellow 75, C.I. Pigment Yellow 77, C.I. Pigment Yellow 81, C.I. Pigment Yellow 83, C.I. Pigment Yellow 93, C.I. Pigment Yellow 94, C.I. Pigment Yellow 95, C.I. Pigment Yellow 97, C.I. Pigment Yellow 98, C.I. Pigment Yellow 99, C.I. Pigment Yellow 108, C.I. Pigment Yellow 109, C.I. Pigment Yellow 110, C.I. Pigment Yellow 113, C.I. Pigment Yellow 114, C.I. Pigment Yellow 117, C.I. Pigment Yellow 120, C.I. Pigment Yellow 122, C.I. Pigment Yellow 124, C.I.

Pigment Yellow 128, C.I. Pigment Yellow 129, C.I. Pigment Yellow 133, C.I. Pigment Yellow 138, C.I. Pigment Yellow 139, C.I. Pigment Yellow 147, C.I. Pigment Yellow 151, C.I. Pigment Yellow 153, C.I. Pigment Yellow 154, C.I. Pigment Yellow 155, C.I. Pigment Yellow 167, C.I. Pigment Yellow 172, C.I. Pigment Yellow 180, C.I. Pigment Yellow 185, and C.I. Pigment Yellow 213.

Carbon black may be a suitable inorganic black pigment. Examples of carbon black pigments include those manufactured by Mitsubishi Chemical Corporation, Japan (such as, e.g., carbon black No. 2300, No. 900, MCF88, No. 33, No. 40, No. 45, No. 52, MA7, MA8, MA100, and No. 2200B); various carbon black pigments of the RAVEN® series manufactured by Columbian Chemicals Company, Marietta, Georgia, (such as, e.g., RAVEN® 5750, RAVEN® 5250, RAVEN® 5000, RAVEN® 3500, RAVEN® 1255, and RAVEN® 700); various carbon black pigments of the REGAL® series, BLACK PEARLS® series, the MOGUL® series, or the MONARCH® series manufactured by Cabot Corporation, Boston, Massachusetts, (such as, e.g., REGAL® 400R, REGAL® 330R, REGAL® 660R, BLACK PEARLS® 700, BLACK PEARLS® 800, BLACK PEARLS® 880, BLACK PEARLS® 1100, BLACK PEARLS® 4350, BLACK PEARLS® 4750, MOGUL® E, MOGUL® L, and ELFTEX® 410); and various black pigments manufactured by Evonik Degussa Orion Corporation, Parsippany, New Jersey, (such as, e.g., Color Black FW1, Color Black FW2, Color Black FW2V, Color Black FW18, Color Black FW200, Color Black S150, Color Black S160, Color Black S170, PRINTEX® 35, PRINTEX® 75, PRINTEX® 80, PRINTEX® 85, PRINTEX® 90, PRINTEX® U, PRINTEX® V, PRINTEX® 140U, Special Black 5, Special Black 4A, and Special Black 4). An example of an organic black pigment includes aniline black, such as C.I. Pigment Black 1.

Some examples of green organic pigments include C.I. Pigment Green 1, C.I. Pigment Green 2, C.I. Pigment Green 4, C.I. Pigment Green 7, C.I. Pigment Green 8, C.I. Pigment Green 10, C.I. Pigment Green 36, and C.I. Pigment Green 45.

Examples of brown organic pigments include C.I. Pigment Brown 1, C.I. Pigment Brown 5, C.I. Pigment Brown 22, C.I. Pigment Brown 23, C.I. Pigment Brown 25, C.I. Pigment Brown 41, and C.I. Pigment Brown 42.

Some examples of orange organic pigments include C.I. Pigment Orange 1, C.I. Pigment Orange 2, C.I. Pigment Orange 5, C.I. Pigment Orange 7, C.I. Pigment Orange 13, C.I. Pigment Orange 15, C.I. Pigment Orange 16, C.I. Pigment Orange 17, C.I. Pigment Orange 19, C.I. Pigment Orange 24, C.I. Pigment Orange 34, C.I. Pigment Orange 36, C.I. Pigment Orange 38, C.I. Pigment Orange 40, C.I. Pigment Orange 43, C.I. Pigment Orange 64, C.I. Pigment Orange 66, C.I. Pigment Orange 71, and C.I. Pigment Orange 73.

The average particle size of the pigments may range anywhere from about 20 nm to about 200 nm. In an example, the average particle size ranges from about 80 nm to about 150 nm.

Any of the pigments mentioned herein can be dispersed by a separate dispersant, such as a styrene (meth)acrylate dispersant, or another dispersant suitable for keeping the pigment suspended in the liquid vehicle. For example, the dispersant can be any dispersing (meth)acrylate polymer, or other type of polymer, such as maleic polymer or a dispersant with aromatic groups and a poly(ethylene oxide) chain.

In one example, (meth)acrylate polymer can be a styrene-acrylic type dispersant polymer, as it can promote $\pi$-stacking between the aromatic ring of the dispersant and various types of pigments, such as copper phthalocyanine pigments, for example. In one example, the styrene-acrylic dispersant can have a weight average molecular weight ranging from about 4,000 Mw to about 30,000 Mw. In another example, the styrene-acrylic dispersant can have a weight average molecular weight ranging from about 8,000 Mw to about 28,000 Mw, from about 12,000 Mw to about 25,000 Mw, from about 15,000 Mw to about 25,000 Mw, from about 15,000 Mw to about 20,000 Mw, or about 17,000 Mw. Regarding the acid number, the styrene-acrylic dispersant can have an acid 30 number from 100 to 350, from 120 to 350, from 150 to 300, from 180 to 250, or about 214, for example. Example commercially available styrene-acrylic dispersants can include JONCRYL®671, JONCRYL® 71, JONCRYL® 96, JONCRYL® 680, JONCRYL® 683, JONCRYL® 678, JONCRYL® 690, JONCRYL® 296, JONCRYL® 696 or JONCRYL® ECO 675 (all available from BASF Corp., Germany)

The term "(meth)acrylate" or "(meth)acrylic acid" or the like refers to monomers, copolymerized monomers, etc., that can either be acrylate or methacrylate (or a combination of both), or acrylic acid or methacrylic acid (or a combination of both). Also, in some examples, the terms "(meth)acrylate" and "(meth)acrylic acid" can be used interchangeably, as acrylates and methacrylates are salts and esters of acrylic acid and methacrylic acid, respectively. Furthermore, mention of one compound over another can be a function of pH. Furthermore, even if the monomer used to form the polymer was in the form of a (meth)acrylic acid during preparation, pH modifications during preparation or subsequently when added to an ink composition can impact the nature of the moiety as well (acid form vs. salt or ester form). Thus, a monomer or a moiety of a polymer described as (meth)acrylic acid or as (meth)acrylate should not be read so rigidly as to not consider relative pH levels, ester chemistry, and other general organic chemistry concepts.

The following are some example pigment and separate dispersant combinations: a carbon black pigment with a styrene acrylic dispersant; PB 15:3 (cyan pigment) with a styrene acrylic dispersant; PR122 (magenta) or a co-crystal of PR122 and PV19 (magenta) with a styrene acrylic dispersant; or PY74 (yellow) or PY155 (yellow) with a styrene acrylic dispersant.

In an example, the pigment is present in the inkjet ink in an amount ranging from about 0.5 wt% to about 6 wt% of the total weight of the inkjet ink. In another example, the pigment is present in the thermal inkjet ink in an amount ranging from about 1 wt% to about 6 wt% of the total weight of the inkjet ink. When the separate dispersant is used, the separate dispersant may be present in an amount ranging from about 0.05 wt% to about 6 wt% of the total weight of the inkjet ink. In some examples, the ratio of pigment to separate dispersant may range from 0.1 (1:10) to 1 (1:1).

*Self-dispersed pigments*

In other examples, the inkjet ink a self-dispersed pigment including a pigment and an organic group attached thereto.

Any of the pigments set forth herein may be used, such as carbon, phthalocyanine, quinacridone, azo, or any other type of organic pigment, as long as at least one organic group that is capable of dispersing the pigment is attached to the pigment.

The organic group that is attached to the pigment includes at least one aromatic group, an alkyl (e.g., $C_1$ to $C_{20}$), and an ionic or ionizable group.

The aromatic group may be an unsaturated cyclic hydrocarbon containing one or more rings and may be substituted or unsubstituted, for example with alkyl groups. Aromatic groups include aryl groups (for example, phenyl, naphthyl, anthracenyl, and the like) and heteroaryl groups (for example, imidazolyl, pyrazolyl, pyridinyl, thienyl, thiazolyl, furyl, triazinyl, indolyl, and the like).

The alkyl may be branched or unbranched, substituted or unsubstituted.

The ionic or ionizable group may be at least one phosphorus-containing group, at least one sulfur-containing group, or at least one carboxylic acid group.

In an example, the at least one phosphorus-containing group has at least one P-O bond or P=O bond, such as at least one phosphonic acid group, at least one phosphinic acid group, at least one phosphinous acid group, at least one phosphite group, at least one phosphate, diphosphate, triphosphate, or pyrophosphate groups, partial esters thereof, or salts thereof. By "partial ester thereof", it is meant that the phosphorus-containing group may be a partial phosphonic acid ester group having the formula $-PO_3RH$, or a salt thereof, wherein R is an aryl, alkaryl, aralkyl, or alkyl group. By "salts thereof", it is meant that the phosphorus-containing group may be in a partially or fully ionized form having a cationic counterion.

When the organic group includes at least two phosphonic acid groups or salts thereof, either or both of the phosphonic acid groups may be a partial phosphonic ester group. Also, one of the phosphonic acid groups may be a phosphonic acid ester having the formula $-PO_3R_2$, while the other phosphonic acid group may be a partial phosphonic ester group, a phosphonic acid group, or a salt thereof. In some instances, it may be desirable that at least one of the phosphonic acid groups is either a phosphonic acid, a partial ester thereof, or salts thereof. When the organic group includes at least two phosphonic acid groups, either or both of the phosphonic acid groups may be in either a partially or fully ionized form. In these examples, either or both may of the phosphonic acid groups have the formula $-PO_3H_2$, $-PO_3H^-M^+$ (monobasic salt), or $-PO_3^{-2}M^{+2}$ (dibasic salt), wherein $M^+$ is a cation such as $Na^+$, $K^+$, $Li^+$, or $NR_4^+$, wherein R, which can be the same or different, represents hydrogen or an organic group such as a substituted or unsubstituted aryl and/or alkyl group.

As other examples, the organic group may include at least one geminal bisphosphonic acid group, partial esters thereof, or salts thereof. By "geminal", it is meant that the at least two phosphonic acid groups, partial esters thereof, or salts thereof are directly bonded to the same carbon atom. Such a group may also be referred to as a 1,1-diphosphonic acid group, partial ester thereof, or salt thereof.

An example of a geminal bisphosphonic acid group may have the formula $-CQ(PO_3H_2)_2$, or may be partial esters thereof or salts thereof. Q is bonded to the geminal position and may be H, R, OR, SR, or $NR_2$ wherein R, which can be the same or different when multiple are present, is selected from H, a $C_1$-$C_{18}$ saturated or unsaturated, branched or unbranched alkyl group, a $C_1$-$C_{18}$ saturated or unsaturated, branched or unbranched acyl group, an aralkyl group, an alkaryl group, or an aryl group. For examples, Q may be H, R, OR, SR, or $NR_2$, wherein R, which can be the same or different when multiple are present, is selected from H, a $C_1$-$C_6$ alkyl group, or an aryl group. As specific examples, Q is H, OH, or $NH_2$. Another example of a geminal bisphosphonic acid group may have the formula $-(CH_2)_nCQ(PO_3H_2)_2$, or may be partial esters thereof or salts thereof, wherein Q is as described above and n is 0 to 9, such as 1 to 9. In some specific examples, n is 0 to 3, such as 1 to 3, or n is either 0 or 1.

Still another example of a geminal bisphosphonic acid group may have the formula $-X-(CH_2)_nCQ(PO_3H_2)_2$, or may be partial esters thereof or salts thereof, wherein Q and n are as described above and X is an arylene, heteroarylene, alkylene, vinylidene, alkarylene, aralkylene, cyclic, or heterocyclic group. In specific examples, X is an arylene group, such as a phenylene, naphthalene, or biphenylene group, which may be further substituted with any group, such as one or more alkyl groups or aryl groups. When X is an alkylene group, examples include substituted or unsubstituted alkylene groups, which may be branched or unbranched and can be substituted with one or more groups, such as aromatic

groups. Examples of X include $C_1$-$C_{12}$ groups like methylene, ethylene, propylene, or butylene. X may be directly attached to the pigment, meaning there are no additional atoms or groups from the attached organic group between the pigment and X. X may also be further substituted with one or more functional groups. Examples of functional groups include R', OR', COR', COOR', OCOR', carboxylates, halogens, CN, $NR'_2$, $SO_3H$, sulfonates, sulfates, NR'(COR'), $CONR'_2$, imides, $NO_2$, phosphates, phosphonates, N=NR', SOR', $NR'SO_2R'$, and $SO_2NR'_2$, wherein R', which can be the same or different when multiple are present, is independently selected from hydrogen, branched or unbranched $C_1$-$C_{20}$ substituted or unsubstituted, saturated or unsaturated hydrocarbons, e.g., alkyl, alkenyl, alkynyl, substituted or unsubstituted aryl, substituted or unsubstituted heteroaryl, substituted or unsubstituted alkaryl, or substituted or unsubstituted aralkyl.

Yet another example of a geminal bisphosphonic acid group may have the formula $-X-Sp-(CH_2)_nCQ(PO_3H_2)_2$, or may be partial esters thereof or salt thereof, wherein X, Q, and n are as described above. "Sp" is a spacer group, which, as used herein, is a link between two groups. Sp can be a bond or a chemical group. Examples of chemical groups include, but are not limited to, $-CO_2-$, $-O_2C-$, -CO-, $-OSO_2-$, $-SO_3-$, $-SO_2-$, $-SO_2C_2H_4O-$, $-SO_2C_2H_4S-$, $-SO_2C_2H_4NR''-$, -O-, -S-, -NR"-, -NR"CO-, -CONR"-, $-NR''CO_2-$, $-O_2CNR''-$, -NR"CONR"-, -N(COR")CO-, -CON(COR")-, $-NR''COCH(CH_2CO_2R'')-$ and cyclic imides therefrom, $-NR''COCH_2CH(CO_2R'')-$ and cyclic imides therefrom, $-CH(CH_2CO_2R'')CONR''-$ and cyclic imides therefrom, $-CH(CO_2R'')CH_2CONR''$ and cyclic imides therefrom (including phthalimide and maleimides of these), sulfonamide groups (including $-SO_2NR''-$ and $-NR''SO_2-$ groups), arylene groups, alkylene groups and the like. R", which can be the same or different when multiple are included, represents H or an organic group such as a substituted or unsubstituted aryl or alkyl group. In the example formula $-X-Sp-(CH_2)_nCQ(PO_3H_2)_2$, the two phosphonic acid groups or partial esters or salts thereof are bonded to X through the spacer group Sp. Sp may be $-CO_2-$, $-O_2C-$, -O-, -NR"-, -NR"CO-, or -CONR"-, $-SO_2NR''-$ $-SO_2CH_2CH_2NR''-$, $-SO_2CH_2CH_2O-$, or $-SO_2CH_2CH_2S-$ wherein R" is H or a $C_1$-$C_6$ alkyl group.

Still a further example of a geminal bisphosphonic acid group may have the formula $-N-[(CH_2)_m(PO_3H_2)]_2$, partial esters thereof, or salts thereof, wherein m, which can be the same or different, is 1 to 9. In specific examples, m is 1 to 3, or 1 or 2. As another example, the organic group may include at least one group having the formula $-(CH_2)n-N-[(CH_2)_m(PO_3H_2)]_2$, partial esters thereof, or salts thereof, wherein n is 0 to 9, such as 1 to 9, or 0 to 3, such as 1 to 3, and m is as defined above. Also, the organic group may include at least one group having the formula $-X-(CH_2)_n-N-[(CH_2)_m(PO_3H_2)]_2$, partial esters thereof, or salts thereof, wherein X, m, and n are as described above, and, in an example, X is an arylene group. Still further, the organic group may include at least one group having the formula $-X-Sp-(CH_2)_n-N-[(CH_2)_m(PO_3H_2)]_2$, partial esters thereof, or salts thereof, wherein X, m, n, and Sp are as described above.

Yet a further example of a geminal bisphosphonic acid group may have the formula $-CR=C(PO_3H_2)_2$, partial esters thereof, or salts thereof. In this example, R can be H, a $C_1$-$C_{18}$ saturated or unsaturated, branched or unbranched alkyl group, a $C_1$-$C_{18}$ saturated or unsaturated, branched or unbranched acyl group, an aralkyl group, an alkaryl group, or an aryl group. In an example, R is H, a $C_1$-$C_6$ alkyl group, or an aryl group.

The organic group may also include more than two phosphonic acid groups, partial esters thereof, or salts thereof, and may, for example include more than one type of group (such as two or more) in which each type of group includes at least two phosphonic acid groups, partial esters thereof, or salts thereof. For example, the organic group may include a group having the formula $-X-[CQ(PO_3H_2)_2]_P$, partial esters thereof, or salts thereof. In this example, X and Q are as described above. In this formula, p is 1 to 4, e.g., 2.

In addition, the organic group may include at least one vicinal bisphosphonic acid group, partial ester thereof, or salts thereof, meaning that these groups are adjacent to each other. Thus, the organic group may include two phosphonic acid groups, partial esters thereof, or salts thereof bonded to adjacent or neighboring carbon atoms. Such groups are also sometimes referred to as 1,2-diphosphonic acid groups, partial esters thereof, or salts thereof. The organic group including the two phosphonic acid groups, partial esters thereof, or salts thereof may be an aromatic group or an alkyl group, and therefore the vicinal bisphosphonic acid group may be a vicinal alkyl or a vicinal aryl diphosphonic acid group, partial ester thereof, or salts thereof. For example, the organic group may be a group having the formula $-C_6H_3-(PO_3H_2)_2$, partial esters thereof, or salts thereof, wherein the acid, ester, or salt groups are in positions ortho to each other.

In other examples, the ionic or ionizable group (of the organic group attached to the pigment) is a sulfur-containing group. The at least one sulfur-containing group has at least one S=O bond, such as a sulfinic acid group or a sulfonic acid group. Salts of sulfinic or sulfonic acids may also be used, such as - $SO_3^-X^+$, where X is a cation, such as $Na^+$, $H^+$, $K^+$, $NH_4^+$, $Li^+$, $Ca^{2+}$, $Mg^+$, etc.

When the ionic or ionizable group is a carboxylic acid group, the group may be COOH or a salt thereof, such as $-COO^-X^+$, $-(COO^-X^+)_2$, or $-(COO^-X^+)_3$.

Examples of the self-dispersed pigments are commercially available as dispersions. Suitable commercially available self-dispersed pigment dispersions include those of the CAB-O-JET® 200 Series, manufactured by Cabot Corporation. Some specific examples include CAB-O-JET® 200 (black pigment), CAB-O-JET® 250C (cyan pigment), CAB-O-JET® 260M or 265M (magenta pigment) and CAB-O-JET® 270 (yellow pigment)). Other suitable commercially available self-dispersed pigment dispersions include those of the CAB-O-JET® 400 Series, manufactured by Cabot

Corporation. Some specific examples include CAB-O-JET® 400 (black pigment), CAB-O-JET® 450C (cyan pigment), CAB-O-JET® 465M (magenta pigment) and CAB-O-JET® 470Y (yellow pigment)). Still other suitable commercially available self-dispersed pigment dispersions include those of the CAB-O-JET® 300 Series, manufactured by Cabot Corporation. Some specific examples include CAB-O-JET® 300 (black pigment) and CAB-O-JET® 352K (black pigment).

The self-dispersed pigment is present in an amount ranging from about 1 wt% to about 6 wt% based on a total weight of the inkjet ink. In an example, the dispersed pigment is present in an amount ranging from about 2 wt% to about 5 wt% based on a total weight of the inkjet ink. In another example, the self-dispersed pigment is present in an amount of about 3 wt% based on the total weight of the inkjet ink. In still another example, the self-dispersed pigment is present in an amount of about 5 wt% based on the total weight of the inkjet ink.

For the pigment dispersions disclosed herein, it is to be understood that the pigment and separate dispersant or the self-dispersed pigment (prior to being incorporated into the inkjet formulation), may be dispersed in water alone or in combination with an additional water soluble or water miscible co-solvent, such as 2-pyrrolidone, 1-(2-hydroxyethyl)-2-pyrrolidone, glycerol, 2-methyl-1,3-propanediol, 1,2-butane diol, diethylene glycol, triethylene glycol, tetraethylene glycol, or a combination thereof. It is to be understood however, that the liquid components of the pigment dispersion become part of the liquid vehicle in the ink formulation.

*Polymeric Binder*

The inkjet ink also includes a polymer binder. Examples of suitable binders include a polyester-polyurethane binder, a polyether-polyurethane binder, a polycarbonate-polyurethane binder, a latex binder, or hybrids of these binders.

In an example, the inkjet ink includes the polyester-polyurethane binder. In an example, the polyester-polyurethane binder is a sulfonated polyester-polyurethane binder. The sulfonated polyester-polyurethane binder can include diaminesulfonate groups. In an example, the polyester-polyurethane binder is a sulfonated polyester-polyurethane binder, and is one of: i) an aliphatic compound including multiple saturated carbon chain portions ranging from $C_4$ to $C_{10}$ in length, and that is devoid of an aromatic moiety, or ii) an aromatic compound including an aromatic moiety and multiple saturated carbon chain portions ranging from $C_4$ to $C_{10}$ in length.

In one example, the sulfonated polyester-polyurethane binder can be anionic. In further detail, the sulfonated polyester-polyurethane binder can also be aliphatic, including saturated carbon chains as part of the polymer backbone or as a side-chain thereof, e.g., $C_2$ to $C_{10}$, $C_3$ to $C_8$, or $C_3$ to $C_6$ alkyl. These polyester-polyurethane binders can be described as "alkyl" or "aliphatic" because these carbon chains are saturated and because they are devoid of aromatic moieties. An example of an anionic aliphatic polyester-polyurethane binder that can be used is IMPRANIL® DLN-SD (CAS# 375390-41-3; Mw 45,000 Mw; Acid Number 5.2; Tg - 47°C; Melting Point 175-200°C) from Covestro. Example components used to prepare the IMPRANIL® DLN-SD or other similar anionic aliphatic polyester-polyurethane binders can include pentyl glycols (e.g., neopentyl glycol); $C_4$ to $C_{10}$ alkyldiol (e.g., hexane-1,6-diol); $C_4$ to $C_{10}$ alkyl dicarboxylic acids (e.g., adipic acid); $C_4$ to $C_{10}$ alkyl diisocyanates (e.g., hexamethylene diisocyanate (HDI)); diamine sulfonic acids (e.g., 1-[(2-aminoethyl)amino]-ethanesulfonic acid); etc.

Alternatively, the sulfonated polyester-polyurethane binder can be aromatic (or include an aromatic moiety) and can include aliphatic chains. An example of an aromatic polyester-polyurethane binder that can be used is DISPERCOLL® U42 (CAS# 157352-07-3). Example components used to prepare the DISPERCOLL® U42 or other similar aromatic polyester-polyurethane binders can include aromatic dicarboxylic acids, e.g., phthalic acid; $C_4$ to $C_{10}$ alkyl dialcohols (e.g., hexane-1,6-diol); $C_4$ to $C_{10}$ alkyl diisocyanates (e.g., hexamethylene diisocyanate (HDI)); diamine sulfonic acids (e.g., 1-[(2-aminoethyl)amino]-ethanesulfonic acid); etc.

Other types of polyester-polyurethanes can also be used, including IMPRANIL® DL 1380, which can be somewhat more difficult to jet from thermal inkjet printheads compared to IMPRANIL® DLN-SD and DISPERCOLL® U42, but still can be acceptably jetted in some examples, and can also provide acceptable washfastness results on a variety of fabric types.

The polyester-polyurethane binders disclosed herein may have a weight average molecular weight (Mw) ranging from about 20,000 to about 300,000. As examples, the weight average molecular weight can range from about 50,000 to about 500,000, from about 100,000 to about 400,000, or from about 150,000 to about 300,000.

The polyester-polyurethane binders disclosed herein may have an acid number that ranges from about 1 mg/g KOH to about 50 mg/g KOH. For this binder, the term "acid number" refers to the mass of potassium hydroxide (KOH) in milligrams that is used to neutralize one gram of the sulfonated polyester-polyurethane binder. To determine this acid number, a known amount of a sample of the polyester-polyurethane binder may be dispersed in water and the aqueous dispersion may be titrated with a polyelectrolyte titrant of a known concentration. In this example, a current detector for colloidal charge measurement may be used. An example of a current detector is the Mütek PCD-05 Smart Particle Charge Detector (available from BTG). The current detector measures colloidal substances in an aqueous sample by detecting the streaming potential as the sample is titrated with the polyelectrolyte titrant to the point of zero charge. An example of a suitable polyelectrolyte titrant is poly(diallyldimethylammonium chloride) (i.e., PolyDADMAC).

As examples, the acid number of the sulfonated polyester-polyurethane binder can range from about 1 mg KOH/g to about 200 mg KOH/g, from about 2 mg KOH/g to about 100 mg KOH/g, or from about 3 mg KOH/g to about 50 mg KOH/g.

In an example of the inkjet ink, the polyester-polyurethane binder has a weight average molecular weight ranging from about 20,000 to about 300,000 and an acid number ranging from about 1 mg KOH/g to about 50 mg KOH/g.

The average particle size of the polyester-polyurethane binders disclosed herein may range from about 20 nm to about 500 nm. As examples, the sulfonated polyester-polyurethane binder can have an average particle size ranging from about 20 nm to about 500 nm, from about 50 nm to about 350 nm, or from about 100 nm to about 250 nm. The particle size of any solids herein, including the average particle size of the dispersed polymer binder, can be determined using a NANOTRAC® Wave device, from Microtrac, e.g., NANOTRAC® Wave II or NANOTRAC® 150, etc, which measures particles size using dynamic light scattering. Average particle size can be determined using particle size distribution data generated by the NANOTRAC® Wave device.

Other examples of the ink include a polyether-polyurethane binder. Examples of polyether-polyurethanes that may be used include IMPRANIL® LP DSB 1069, IMPRANIL® DLE, IMPRANIL® DAH, or IMPRANIL® DL 1116 (Covestro (Germany)); or HYDRAN® WLS-201 or HYDRAN® WLS-201K (DIC Corp. (Japan)); or TAKELAC® W-6061T or TAKELAC® WS-6021 (Mitsui (Japan)).

Still other examples of the ink include a polycarbonate-polyurethane binder. Examples of polycarbonate-polyurethanes that may be used as the polymeric binder include IMPRANIL® DLC-F or IMPRANIL® DL 2077 (Covestro (Germany)); or HYDRAN® WLS-213 (DIC Corp. (Japan)); or TAKELAC® W-6110 (Mitsui (Japan)).

In still other examples, the ink includes a latex polymer binder. The term "latex polymer" generally refers to any dispersed polymer prepared from acrylate and/or methacrylate monomers, including an aromatic (meth)acrylate monomer that results in aromatic (meth)acrylate moieties as part of the latex. In an example, the latex polymer may be devoid of styrene. In some examples, the latex particles can include a single heteropolymer that is homogenously copolymerized. In another example, a multi-phase latex polymer can be prepared that includes a first heteropolymer and a second heteropolymer. The two heteropolymers can be physically separated in the latex particles, such as in a core-shell configuration, a two-hemisphere configuration, smaller spheres of one phase distributed in a larger sphere of the other phase, interlocking strands of the two phases, and so on. If a two-phase polymer, the first heteropolymer phase can be polymerized from two or more aliphatic (meth)acrylate ester monomers or two or more aliphatic (meth)acrylamide monomers. The second heteropolymer phase can be polymerized from a cycloaliphatic monomer, such as a cycloaliphatic (meth)acrylate monomer or a cycloaliphatic (meth)acrylamide monomer. The first or second heteropolymer phase can include the aromatic (meth)acrylate monomer, e.g., phenyl, benzyl, naphthyl, etc. In one example, the aromatic (meth)acrylate monomer can be a phenoxylalkyl (meth)acrylate that forms a phenoxylalkyl (meth)acrylate moiety within the latex polymer, e.g. phenoxylether, phenoxylpropyl, etc. The second heteropolymer phase can have a higher $T_g$ than the first heteropolymer phase in one example. The first heteropolymer composition may be considered a soft polymer composition and the second heteropolymers composition may be considered a hard polymer composition. If a two-phase heteropolymer, the first heteropolymer composition can be present in the latex polymer in an amount ranging from about 15 wt% to about 70 wt% of a total weight of the polymer particle, and the second heteropolymer composition can be present in an amount ranging from about 30 wt% to about 85 wt% of the total weight of the polymer particle. In other examples, the first heteropolymer composition can be present in an amount ranging from about 30 wt% to about 40 wt% of a total weight of the polymer particle, and the second heteropolymer composition can be present in an amount ranging from about 60 wt% to about 70 wt% of the total weight of the polymer particle.

In more general terms, whether there is a single heteropolymer phase, or there are multiple heteropolymer phases, heteropolymer(s) or copolymer(s) can include a number of various types of copolymerized monomers, including aliphatic(meth)acrylate ester monomers, such as linear or branched aliphatic (meth)acrylate monomers, cycloaliphatic (meth)acrylate ester monomers, or aromatic monomers. However, in accordance with the present disclosure, the aromatic monomer(s) selected for use can include an aromatic (meth)acrylate monomer. To be clear, reference to an "aromatic (meth)acrylate" does not include the copolymerization of two different monomers copolymerized together into a common polymer, e.g., styrene and methyl methacrylate. Rather, the term "aromatic (meth)acrylate" refers to a single aromatic monomer that is functionalized by an acrylate, methacrylate, acrylic acid, or methacrylic acid, etc.

The weight average molecular weight of the latex polymer can be from 50,000 Mw to 500,000 Mw, for example. The acid number of the latex polymer can be from 2 mg KOH/g to 40 mg KOH/g, from 2 mg KOH/g to 30 mg KOH/g, or 3 mg KOH/g to 26 mg KOH/g, or 4 mg KOH/g to 20 mg KOH/g, for example.

The latex polymer can be in acid form, such as in the form of a polymer with (meth)acrylic acid surface groups, or may be in its salt form, such as in the form of a polymer with poly(meth)acrylate groups.

In an example, any of the polyurethane-based polymeric binders may be present in the inkjet ink in a total amount ranging from about 2 wt% to about 15 wt% of the total weight of the inkjet ink. In another example, the latex polymer can be present in this example ink at a relatively high concentration, e.g., from 5 wt% to 20 wt%, from 6 wt% to 15 wt%, or from 7 wt% to 12 wt%, for example.

The polymeric binder (prior to being incorporated into the inkjet formulation) may be dispersed in water alone or in combination with an additional water soluble or water miscible co-solvent, such as those described for the pigment dispersion. It is to be understood however, that the liquid components of the binder dispersion become part of the liquid vehicle in the ink formulation.

*Ink Vehicle*

In addition to the pigment dispersion and the polymeric binder, the ink includes a liquid vehicle.

As used herein, the term "vehicle" may refer to the liquid fluid with which the pigment dispersion and polymeric binder are mixed to form a thermal or a piezoelectric inkjet ink(s). A wide variety of vehicles may be used with the inkjet ink(s) of the present disclosure. The vehicle may include a co-solvent, an anti-kogation agent, an anti-decel agent, a surfactant, a biocide, a pH adjuster, or combinations thereof. In an example, the vehicle consists of the co-solvent, the anti-kogation agent, the anti-decel agent, the surfactant, the biocide, a pH adjuster, or a combination thereof. In another example, the vehicle consists of water and the co-solvent, the anti-kogation agent, the anti-decel agent, the surfactant, the biocide, a pH adjuster, or a combination thereof. In still another example, the vehicle consists of the anti-kogation agent, the anti-decel agent, the surfactant, the biocide, a pH adjuster, and water.

The vehicle may include co-solvent(s). The co-solvent(s) may be present in an amount ranging from about 4 wt% to about 30 wt% (based on the total weight of the inkjet ink). In an example, the vehicle includes glycerol. Other examples of co-solvents include alcohols, aliphatic alcohols, aromatic alcohols, diols, glycol ethers, polyglycol ethers, caprolactams, formamides, acetamides, and long chain alcohols. Examples of such compounds include primary aliphatic alcohols, secondary aliphatic alcohols, 1,2-alcohols, 1,3-alcohols, 1,5-alcohols, ethylene glycol alkyl ethers, propylene glycol alkyl ethers, higher homologs ($C_6$-$C_{12}$) of polyethylene glycol alkyl ethers, N-alkyl caprolactams, unsubstituted caprolactams, both substituted and unsubstituted formamides, both substituted and unsubstituted acetamides, and the like. Specific examples of alcohols may include ethanol, isopropyl alcohol, butyl alcohol, and benzyl alcohol. Other specific examples include 2-ethyl-2-(hydroxymethyl)-1, 3-propane diol (EPHD), dimethyl sulfoxide, sulfolane, and/or alkyldiols such as 1,2-hexanediol.

The co-solvent may also be a polyhydric alcohol or a polyhydric alcohol derivative. Examples of polyhydric alcohols may include ethylene glycol, diethylene glycol, propylene glycol, butylene glycol, triethylene glycol, 1,5-pentanediol, 1,2-hexanediol, 1,2,6-hexanetriol, glycerin, trimethylolpropane, and xylitol. Examples of polyhydric alcohol derivatives may include an ethylene oxide adduct of diglycerin.

The co-solvent may also be a nitrogen-containing solvent. Examples of nitrogen-containing solvents may include 2-pyrrolidone, 1-(2-hydroxyethyl)-2-pyrrolidone, N-methyl-2-pyrrolidone, cyclohexylpyrrolidone, and triethanolamine.

An anti-kogation agent may also be included in the vehicle of a thermal inkjet formulation. Kogation refers to the deposit of dried ink on a heating element of a thermal inkjet printhead. Anti-kogation agent(s) is/are included to assist in preventing the buildup of kogation. In some examples, the anti-kogation agent may improve the jettability of the thermal inkjet ink. The anti-kogation agent may be present in the thermal inkjet ink in an amount ranging from about 0.1 wt% to about 1.5 wt%, based on the total weight of the thermal inkjet ink. In an example, the anti-kogation agent is present in the thermal inkjet ink in an amount of about 0.5 wt%, based on the total weight of the thermal inkjet ink.

Examples of suitable anti-kogation agents include oleth-3-phosphate (commercially available as CRODAFOS™ 03A or CRODAFOS™ N-3A) or dextran 500k. Other suitable examples of the anti-kogation agents include CRODAFOS™ HCE (phosphate-ester from Croda Int.), CRODAFOS® N10 (oleth-10-phosphate from Croda Int.), or DISPERSOGEN® LFH (polymeric dispersing agent with aromatic anchoring groups, acid form, anionic, from Clariant), etc.

The vehicle may include anti-decel agent(s). Decel refers to a decrease in drop velocity over time with continuous firing. Anti-decel agent(s) is/are included to assist in preventing decel. In some examples, the anti-decel agent may improve the jettability of the inkjet ink. The anti-decel agent may be present in an amount ranging from about 0.2 wt% to about 5 wt% (based on the total weight of the inkjet ink). In an example, the anti-decel agent is present in the inkjet ink in an amount of about 1 wt%, based on the total weight of the inkjet ink.

An example of a suitable anti-decel agent is ethoxylated glycerin having the following formula:

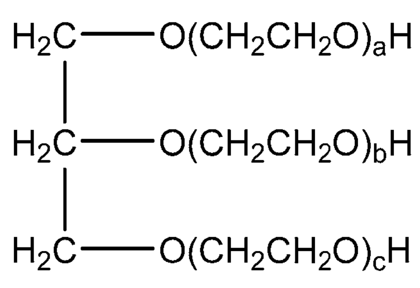

in which the total of a+b+c ranges from about 5 to about 60, or in other examples, from about 20 to about 30. An example of the ethoxylated glycerin is LIPONIC® EG-1 (LEG-1, glycereth-26, a+b+c=26, available from Lipo Chemicals).

The vehicle of the inkjet ink may also include surfactant(s). In any of the examples disclosed herein, the surfactant may be present in an amount ranging from about 0.01 wt% to about 5 wt% (based on the total weight of the inkjet ink). In an example, the surfactant is present in the inkjet ink in an amount ranging from about 0.05 to about 3 wt%, based on the total weight of the inkjet ink.

The surfactant may include anionic and/or non-ionic surfactants. Examples of the anionic surfactant may include alkylbenzene sulfonate, alkylphenyl sulfonate, alkylnaphthalene sulfonate, higher fatty acid salt, sulfate ester salt of higher fatty acid ester, sulfonate of higher fatty acid ester, sulfate ester salt and sulfonate of higher alcohol ether, higher alkyl sulfosuccinate, polyoxyethylene alkylether carboxylate, polyoxyethylene alkylether sulfate, alkyl phosphate, and polyoxyethylene alkyl ether phosphate. Specific examples of the anionic surfactant may include dodecylbenzenesulfonate, isopropylnaphthalenesulfonate, monobutylphenylphenol monosulfonate, monobutylbiphenyl sulfonate, monobutylbiphenylsul fonate, and dibutylphenylphenol disulfonate. Examples of the non-ionic surfactant may include polyoxyethylene alkyl ether, polyoxyethylene alkyl phenyl ether, polyoxyethylene fatty acid ester, sorbitan fatty acid ester, polyoxyethylene sorbitan fatty acid ester, polyoxyethylene sorbitol fatty acid ester, glycerin fatty acid ester, polyoxyethylene glycerin fatty acid ester, polyglycerin fatty acid ester, polyoxyethylene alkylamine, polyoxyethylene fatty acid amide, alkylalkanolamide, polyethylene glycol polypropylene glycol block copolymer, acetylene glycol, and a polyoxyethylene adduct of acetylene glycol. Specific examples of the non-ionic surfactant may include polyoxyethylenenonyl phenylether, polyoxyethyleneoctyl phenylether, and polyoxyethylenedodecyl. Further examples of the non-ionic surfactant may include silicon surfactants such as a polysiloxane oxyethylene adduct; fluorine surfactants such as perfluoroalkylcarboxylate, perfluoroalkyl sulfonate, and oxyethyleneperfluoro alkylether; and biosurfactants such as spiculisporic acid, rhamnolipid, and lysolecithin.

In some examples, the vehicle may include a silicone-free alkoxylated alcohol surfactant such as, for example, TEGO® Wet 510 (EvonikTegoChemie GmbH) and/or a self-emulsifiable wetting agent based on acetylenic diol chemistry, such as, for example, SURFYNOL® SE-F (Air Products and Chemicals, Inc.). Other suitable commercially available surfactants include SURFYNOL® 465 (ethoxylatedacetylenic diol), SURFYNOL® 440 (an ethoxylated low-foam wetting agent) SURFYNOL® CT-211 (now CARBOWET® GA-211, non-ionic, alkylphenylethoxylate and solvent free), and SURFYNOL® 104 (non-ionic wetting agent based on acetylenic diol chemistry), (all of which are from Air Products and Chemicals, Inc.); ZONYL® FSO (a.k.a. CAPSTONE®, which is a water-soluble, ethoxylated non-ionic fluorosurfactant from Dupont); TERGITOL® TMN-3 and TERGITOL® TMN-6 (both of which are branched secondary alcohol ethoxylate, non-ionic surfactants), and TERGITOL® 15-S-3, TERGITOL® 15-S-5, and TERGITOL® 15-S-7 (each of which is a secondary alcohol ethoxylate, non-ionic surfactant) (all of the TERGITOL® surfactants are available from The Dow Chemical Co.).

The vehicle may also include biocide(s). In an example, the total amount of biocide(s) in the inkjet ink ranges from about 0.1 wt% to about 0.25 wt% (based on the total weight of the inkjet ink). In another example, the total amount of biocide(s) in the inkjet ink is about 0.22 wt% (based on the total weight of the inkjet ink). In some instances, the biocide may be present in the pigment dispersion that is mixed with the vehicle.

Examples of suitable biocides include the NUOSEPT® (Ashland Inc.), UCARCIDE™ or KORDEK™ (Dow Chemical Co.), PROXEL® (Arch Chemicals) series, ACTICIDE® B20 and ACTICIDE® M20 (Thor Chemicals), and combinations thereof.

The vehicle may also include a pH adjuster. A pH adjuster may be included in the thermal inkjet ink to achieve a desired pH (e.g., a pH of about 8.5) and/or to counteract any slight pH drop that may occur over time. In an example, the total amount of pH adjuster(s) in the thermal inkjet ink ranges from greater than 0 wt% to about 0.1 wt% (based on the total weight of the thermal inkjet ink). In another example, the total amount of pH adjuster(s) in the inkjet ink composition is about 0.03 wt% (based on the total weight of the thermal inkjet ink).

Examples of suitable pH adjusters include metal hydroxide bases, such as potassium hydroxide (KOH), sodium hydroxide (NaOH), etc. In an example, the metal hydroxide base may be added to the thermal inkjet ink in an aqueous solution. In another example, the metal hydroxide base may be added to the thermal inkjet ink in an aqueous solution including 5 wt% of the metal hydroxide base (e.g., a 5 wt% potassium hydroxide aqueous solution).

Suitable pH ranges for examples of the ink can be from pH 7 to pH 11, from pH 7 to pH 10, from pH 7.2 to pH 10, from pH 7.5 to pH 10, from pH 8 to pH 10, 7 to pH 9, from pH 7.2 to pH 9, from pH 7.5 to pH 9, from pH 8 to pH 9, from 7 to pH 8.5, from pH 7.2 to pH 8.5, from pH 7.5 to pH 8.5, from pH 8 to pH 8.5, from 7 to pH 8, from pH 7.2 to pH 8, or from pH 7.5 to pH 8.

The balance of the inkjet ink is water. In an example, deionized water may be used. The water included in the inkjet ink may be: i) part of the pigment dispersion and/or binder dispersion, ii) part of the vehicle, iii) added to a mixture of the pigment dispersion and/or binder dispersion and the vehicle, or iv) a combination thereof. In examples where the inkjet ink is a thermal inkjet ink, the liquid vehicle is an aqueous based vehicle including at least 70% by weight of water. In examples where the inkjet ink is a piezoelectric inkjet ink, the liquid vehicle is a solvent based vehicle including at

least 50% by weight of the co-solvent.

***Jetting methods***

In some examples, the printed image may be generated by thermal inkjet printing multiple thermal inkjet inks on e.g., a cotton fabric. When multiple thermal inkjet inks are used, each of the multiple thermal inkjet inks may be an example of any of the thermal inkjet inks described herein. In an example, multiple thermal inkjet inks may be used to create a multicolored print. In these examples, the multiple thermal inkjet inks may each include a different pigment, which may introduce a different color to each thermal inkjet ink. The portions of print on which the thermal inkjet ink(s) are thermal inkjet printed display the color(s) of the corresponding thermal inkjet ink(s), or a color generated by mixing of two or more of the thermal inkjet inks.

In an example, the thermal inkjet printing of the thermal inkjet ink is accomplished using a thermal inkjet printer. In the thermal inkjet printer, a media handling system feeds the textile fabric through a print/image zone. In some examples, a series of advance or drive rollers (not shown) powered by a motor and gear assembly may be used to move the textile fabric from a supply tray into the print/image zone for printing. The printer may have a scan axis, and a carriage may be supported for reciprocal movement along the scan axis back and forth across the print/image zone. The carriage may support inkjet applicator(s) (i.e., cartridges, pens, etc.) that dispense the thermal inkjet ink(s) disclosed herein onto the cotton fabric. The carriage is driven by a propulsion system that operates in response to control signals received from a processor.

The printer may also include a platen 28 upon which the textile substrate/fabric 33 is transported for printing and curing. In some examples, the platen 28 may be thermally conductive (e.g., copper), and thus may be heated in order to warm the textile fabric 33 to a temperature below a fixation temperature of the inkjet ink 24. In other examples, the platen may be minimally- or non-thermally conductive (e.g., stainless steel, glass, etc.)

It is to be understood that the pigmented inkjet inks may also be suitable for, or formulated to be suitable for jetting via piezoelectric inkjet printheads. When intended for piezoelectric printing, the amount of the water soluble or water miscible co-solvent may be greater than or equal to 50 wt%, based on the total weight of the inkjet ink. Also, the amount of water included in the inkjet ink may vary, depending upon the amounts of the other inkjet ink components. As an example, thermal inkjet compositions may include more water than piezoelectric inkjet compositions.

Further, the total solids content of the inkjet ink composition may be variable depending on the intended use of the inkjet ink. In an example, the inkjet ink composition is a thermal inkjet ink, and has a solids content ranging from about 2 wt% to about 15 wt% based on the total weight of the thermal inkjet ink. In another example, the inkjet ink composition is a piezoelectric inkjet inkjet ink, and has a solids content ranging from about 10 wt% to about 25 wt% based on the total weight of the piezoelectric inkjet ink. The solids content impacts the viscosity. Where the ink composition is intended for use with thermal inkjet printheads, the viscosity of the ink as measured at ambient conditions (e.g., 25°C, 1 atm) may be less than or equal to 6 centipoise (cP). However, where the ink composition is intended for use with piezoelectric printheads, the viscosity of the ink as measured at ambient conditions may be greater than or equal to 10 cP.

To further illustrate the present disclosure, examples are given herein. It is to be understood that these examples are provided for illustrative purposes and are not to be construed as limiting the scope of the present disclosure.

## EXAMPLES

### Example 1

In this example, a water based calcium salt fixer was used. The formulation of the water based calcium salt fixer is shown in Table 1. Each of the weight percentages in Table 1 represents the loading of the active component in the final formulation.

**Table 1**

| Ingredient Type | Specific Ingredient | Wt% |
|---|---|---|
| Solvent | Glycerol, dipropylene glycol, or tetraethylene glycol | 12 |
| Surfactant | i) TERGITOL® 15-S-30 (The Dow Chemical Co.) or ii) SURFYNOL® SEF (Evonik Ind.) | i) 0.3 or ii) 0.07 |
| Fixing Agent | Calcium nitrate tetrahydrate* | 6.3 |
| Chelating Agent | TIRON™ monohydrate | 0.1 |
| Antimicrobial | ACTICIDE® B20 (Thor Chemicals) | 0.04 |

(continued)

| Ingredient Type | Specific Ingredient | Wt% |
|---|---|---|
| Water | | Balance |
| *referred to as Ca(II) or the salt in Examples 1 and 2 | | |

In this example, three different blocked polyisocyanates were added to respective samples of the water based calcium salt fixer to determine the compatibility of each blocked polyisocyanate with the water based formulation. The first blocked polyisocyanate was a non-ionic blocked polyisocyanate having an acid number of 0.6 mg KOH/g, which is commercially available under the tradename FIXER™ WF-N (Matsui). Two drops of the first (non-ionic) blocked polyisocyanate were added to the water based calcium salt fixer to form a first sample. The second blocked polyisocyanate was a high anionic blocked polyisocyanate having an acid number of 10 mg KOH/g, which is commercially available under the tradename IMPRAFIX® 2794 (Covestro). Two drops of the second (anionic) blocked polyisocyanate were added to the water based calcium salt fixer to form a second sample. The third blocked polyisocyanate was a high anionic blocked polyisocyanate having an acid number of 32 mg KOH/g, which is commercially available under the tradename BAYHYDUR® BL XP 2706 (Covestro). Two drops of the third (anionic) blocked polyisocyanate were added to the water based calcium salt fixer to form a third sample.

In each of the second and third samples, the respective high anionic blocked polyisocyanates precipitated out of the water based calcium salt fixer. The precipitates clustered and floated to the top of the respective samples.

In contrast, in the first sample, the non-ionic blocked polyisocyanate was fully dispersed in the water based calcium salt fixer.

From these results, it was concluded that not all blocked polyisocyanates can be used in combination with the water based calcium salt fixer. More particularly, these results showed that high anionic blocked polyisocyanates cannot be used in combination with the water based calcium salt fixer, while non-ionic blocked polyisocyanates can be used in combination with the water based calcium salt fixer.

<u>Example 2</u>

Four different example inkjet pre-treatment fluids were prepared using the non-ionic blocked polyisocyanate from Example 1. Two different comparative example inkjet pre-treatment fluids were prepared without any blocked polyisocyanates. The formulations of the example and comparative example inkjet pre-treatment fluids are shown in Table 2.

Each of the weight percentages in Table 2 represents the loading of the active component in the final formulations.

As shown in Table 2, the example and comparative example inkjet pre-treatment fluids were prepared with two different amounts of calcium nitrate tetrahydrate (either 6.34 wt% or 10 wt%), and the example inkjet pre-treatment fluids were prepared with two different amounts of the non-ionic blocked polyisocyanate (either 2 wt% or 3 wt%). The fluid identifiers used throughout this example are "XX PT #-#", where i) "XX PT" is CE PT for the comparative example fluids and "Ex. PT" for the example fluids, and ii) "#-#" represents an amount of the calcium nitrate tetrahydrate-an amount of the non-ionic blocked polyisocyanate. For the first # in #-#, "1" represents 6.34 wt% of calcium nitrate tetrahydrate and "2" represents 10 wt% of calcium nitrate tetrahydrate. For the second # in #-#, "0" represents no blocked polyisocyanate, "2" represents 2 wt% of the non-ionic blocked polyisocyanate, and "3" represents 3 wt% of the non-ionic blocked polyisocyanate.

**Table 2**

| Ingredient Type | Specific Ingredient | CE PT 1-0 Wt% | CE PT 2-0 Wt% | Ex. PT 1-2 Wt% | Ex. PT 2-2 Wt% | Ex. PT 1-3 Wt% | Ex. PT 2-3 Wt% |
|---|---|---|---|---|---|---|---|
| Non-ionic Blocked Polyisocyanate | FIXER™ WF-N (Matsui) | 0 | 0 | 2 | 2 | 3 | 3 |
| Fixing Agent | Calcium nitrate tetrahydrate | 6.34 | 10 | 6.34 | 10 | 6.34 | 10 |
| Solvent | Glycerol or Dipropylene Glycol or Tetraethylene Glycol | 12 | 12 | 12 | 12 | 12 | 12 |

(continued)

| Ingredient Type | Specific Ingredient | CE PT 1-0 Wt% | CE PT 2-0 Wt% | Ex. PT 1-2 Wt% | Ex. PT 2-2 Wt% | Ex. PT 1-3 Wt% | Ex. PT 2-3 Wt% |
|---|---|---|---|---|---|---|---|
| Surfactant | i) TEPGITOL® 15-S-30 (The Dow Chemical Co.) or ii) SURFYNOL® SEF (Evonik Ind.) | i) 0.3 or ii) 0.07 | i) 0.3 or ii) 0.07 | i) 0.3 or ii) 0.07 | i) 0.3 or ii) 0.07 | i) 0.3 or ii) 0.07 | i) 0.3 or ii) 0.07 |
| Chelating Agent | TIPON™ monohydrate | 0.1 | 0.1 | 0.1 | 0.1 | 0.1 | 0.1 |
| Antimicrobial | ACTICIDE® B20 (Thor Chemicals) | 0.04 | 0.04 | 0.04 | 0.04 | 0.04 | 0.04 |
| Water | | Bal. | Bal. | Bal. | Bal. | Bal. | Bal. |

Example black, cyan, magenta, and yellow pigmented inks were also prepared. All of the ink formulations are shown in Table 3. Each of the weight percentages in Table 3 represents the loading of the active component in the final formulations.

**TABLE 3**

| Ingredient Type | Specific Ingredient | Black Ink (wt%) | Cyan Ink (wt%) | Magenta Ink (wt%) | Yellow Ink (wt%) |
|---|---|---|---|---|---|
| Pigment Dispersion | Carbon black | 2.5 | N/A | N/A | N/A |
| | Pigment Blue 15:3 | N/A | 2.5 | N/A | N/A |
| | Combination of Pigment Red 122 and Pigment Violet 19 | N/A | N/A | 2.5 | N/A |
| | Pigment Yellow 155 | N/A | N/A | N/A | 2.5 |
| Binder | IMPRANIL® DLN-SD | 6 | 6 | 6 | 6 |
| Solvent | Glycerol | 8 | 8 | 8 | 8 |
| Surfactant | SURYNOL® 440 | 0.3 | 0.3 | 0.3 | 0.3 |
| Anti-Kogation Agent | CRODAFOS™ N-3A | 0.5 | 0.5 | 0.5 | 0.5 |
| Anti-Decel Agent | LIPONIC® EG-1 | 1 | 1 | 1 | 1 |
| Antimicrobial | ACTICIDE® B20 (Thor Chemicals) | 0.044 | 0.044 | 0.044 | 0.044 |
| Water | | Balance | Balance | Balance | Balance |

Two different textile substrates were used: cotton and a polyester/cotton blend (65/35).

For baseline example prints, no pre-treatment fluid was printed, and each of the respective inks was printed on the respective textile substrates, at 20 grams per square meter (gsm) with a 12 ng drop weight printhead and a testbed inkjet printer. The baseline example prints were cured at 150°C for 3 minutes.

For first comparative example black, cyan, magenta, and yellow prints, the comparative example pre-treatment fluid CE PT 1-0 (with 6.34 wt% Ca(II) and no blocked polyisocyanate) was printed, at 5 gsm, on each of the textile substrates, followed by printing of 20 gsm of each of the inks.

For second comparative example black and cyan prints, the comparative example pre-treatment fluid CE PT 2-0 (with 10 wt% Ca(II) and no blocked polyisocyanate) was printed, at 5 gsm, on each of the textile substrates, and the black and cyan inks were respectively printed, at 20 gsm, on the pre-treatment fluid CE PT 2-0.

For first example black, cyan, and magenta prints, the example pre-treatment fluid Ex. PT 1-2 (with 6.34 wt% Ca(II) and 2 wt% non-ionic blocked polyisocyanate) was printed, at 5 gsm, on each of the textile substrates, and the black, cyan, and magenta inks were respectively printed, at 20 gsm, on the pre-treatment fluid Ex. PT 1-2.

For second example black, cyan, magenta, and yellow prints, the example pre-treatment fluid Ex. PT 1-3 (with

6.34 wt% Ca(II) and 3 wt% non-ionic blocked polyisocyanate) was printed, at 5 gsm, on each of the textile substrates, and each of the inks was respectively printed, at 20 gsm, on the pre-treatment fluid Ex. PT 1-3.

For third example black and cyan prints, the example pre-treatment fluid Ex. PT 2-2 (with 10 wt% Ca(II) and 2 wt% non-ionic blocked polyisocyanate) was printed, at 5 gsm, on each of the textile substrates, and the black and cyan inks were respectively printed, at 20 gsm, on the pre-treatment fluid Ex. PT 2-2.

For fourth example black and cyan prints, the example pre-treatment fluid Ex. PT 2-3 (with 10 wt% Ca(II) and 3 wt% non-ionic blocked polyisocyanate) was printed, at 5 gsm, on each of the textile substrates, and the black and cyan inks were respectively on each of the textile substrates, and the black and cyan inks were respectively printed, at 20 gsm, on each of the textile substrates, and the black and cyan inks were respectively on the pre-treatment fluid Ex. PT 2-3.

The various example and comparative example prints were tested for optical density and washfastness.

Optical Density

The initial optical density (initial OD) of each baseline print, example print and comparative example print was measured. Then, each baseline print, example print and comparative example print was washed 5 times in a Kenmore 90 Series Washer (Model 110.289 227 91) with warm water (at about 40°C) and detergent. Each print was allowed to air dry between each wash. Then, the optical density (OD after 5 washes) of each print was measured, and the percent change in optical density (%Δ OD) was calculated for each print.

The initial optical density (initial OD) and the percent change in optical density vs. the samples without pre-treatment (%Δ in OD vs. no PT) of each print generated on cotton and polyester/cotton blend are shown in Table 4. In Table 4, each print is identified by the pre-treatment fluid used to generate the print.

**TABLE 4**

| | | Black Ink | | Cyan Ink | | Maqenta Ink | | Yellow Ink | |
|---|---|---|---|---|---|---|---|---|---|
| **Textile Fabric** | **Print / Pre-Treatment** | **Initial OD** | **%Δ OD vs. no PT** | **Initial OD** | **%Δ OD vs. no PT** | **Initial OD** | **%Δ OD vs. no PT** | **Initial OD** | **%Δ OD vs. no PT** |
| Cotton | Baseline / No PT | 1.110 | N/A | 1.129 | N/A | 0.982 | N/A | 0.911 | N/A |
| | 1st Comp. Print / CE PT 1-0 | 1.187 | 6.9 | 1.187 | 5.1 | 1.032 | 5.0 | 0.994 | 9.0 |
| | 1st Ex. Print / Ex. PT 1-2 | 1.209 | 9.0 | 1.209 | 7.1 | N/A | N/A | N/A | N/A |
| | 2nd Ex. Print / Ex. PT 1-3 | 1.204 | 8.5 | 1.204 | 6.6 | 1.059 | 7.8 | 0.990 | 8.6 |
| | 2nd Comp. Print / CE PT 2-0 | 1.238 | 11.6 | 1.238 | 9.7 | N/A | N/A | N/A | N/A |
| | 3rd Ex. Print / Ex. PT 2-2 | 1.235 | 11.3 | 1.235 | 9.4 | N/A | N/A | N/A | N/A |
| | 4th Ex. Print / Ex. PT 2-3 | 1.252 | 12.8 | 1.252 | 10.9 | N/A | N/A | N/A | N/A |

(continued)

| | | Black Ink | | Cyan Ink | | Maqenta Ink | | Yellow Ink | |
|---|---|---|---|---|---|---|---|---|---|
| **Textile Fabric** | **Print / Pre-Treatment** | **Initial OD** | **%Δ OD vs. no PT** | **Initial OD** | **%Δ OD vs. no PT** | **Initial OD** | **%Δ OD vs. no PT** | **Initial OD** | **%Δ OD vs. no PT** |
| Polyester Cotton Blend | Baseline / No PT | 1.110 | N/A | 1.109 | N/A | 0.984 | N/A | 0.894 | N/A |
| | 1st Comp. Print / CE PT 1-0 | 1.219 | 9.8 | 1.209 | 9.0 | 1.069 | 8.6 | 0.993 | 11.1 |
| | 1st Ex. Print / Ex. PT 1-2 | 1.199 | 8.1 | 1.201 | 8.3 | 1.053 | 7.0 | N/A | N/A |
| | 2nd Ex. Print / Ex. PT 1-3 | 1.246 | 12.3 | 1.237 | 11.5 | 1.103 | 12.0 | 1.003 | 12.2 |
| | 2nd Comp. Print / CE PT 2-0 | 1.259 | 13.5 | 1.263 | 13.9 | N/A | N/A | N/A | N/A |
| | 3rd Ex. Print / Ex. PT 2-2 | 1.253 | 12.9 | 1.225 | 10.5 | N/A | N/A | N/A | N/A |
| | 4th Ex. Print / Ex. PT 2-3 | 1.263 | 13.8 | 1.246 | 12.4 | N/A | N/A | N/A | N/A |

These results illustrate that the optical density was higher for the comparative and example prints (each of which used some pre-treatment fluid) than the baseline prints (with no pre-treatment fluid), regardless of the color, on both types of textile substrate. On both textile substrates, the 3rd and 4th example black prints (respectively formed with Ex. PT 2-2 and Ex. PT 2-3, each of which had 10% Ca(II) salt) exhibited higher optical density than the 1st and 2nd example black prints (respectively formed with Ex. PT 1-2 and Ex. PT 1-3, each of which had 6.43% Ca(II) salt). On cotton, the 3rd and 4th example cyan prints (respectively formed with Ex. PT 2-2 and Ex. PT 2-3, each of which had 10% Ca(II) salt) exhibited higher optical density than the 1st and 2nd example cyan prints (respectively formed with Ex. PT 1-2 and Ex. PT 1-3, each of which had 6.43% Ca(II) salt). On the polyester cotton blend, the 3rd and 4th example cyan prints (respectively formed with Ex. PT 2-2 and Ex. PT 2-3, each of which had 10% Ca(II) salt) exhibited similar optical density to or higher optical density than the 1st and 2nd example cyan prints (respectively formed with Ex. PT 1-2 and Ex. PT 1-3, each of which had 6.43% Ca(II) salt). Overall, these results indicate that the example pre-treatment fluids exhibit comparable or improved optical density when compared to the comparative pre-treatment fluids, and that the optical density improvement may be greater when more calcium salt is included.

*Washfastness*

Each baseline print, example print, and comparative print was also tested for washfastness. The L*a*b* values of a color (e.g., cyan, magenta, yellow, black, red, green, blue, white) before and after the 5 washes were measured. L* is lightness, a* is the color channel for color opponents green-red, and b* is the color channel for color opponents blue-yellow. The color change was then calculated using both the CIEDE1976 color-difference formula and the CIEDE2000 color-difference formula.

The CIEDE1976 color-difference formula is based on the CIELAB color space. Given a pair of color values in CIELAB space $L^*_1$ ,$a^*_1$,$b^*_1$ and $L^*_2$,$a^*_2$,$b^*_2$, the CIEDE1976 color difference between them is as follows:

$$\Delta E_{76} = \sqrt{[(L_2^* - L_1^*)^2 + (a_2^* - a_1^*)^2 + (b_2^* - b_1^*)^2]}$$

It is noted that $\Delta E_{76}$ is the commonly accepted notation for CIEDE1976.

The CIEDE2000 color-difference formula is based on the CIELAB color space. Given a pair of color values in CIELAB space L*1 ,a*1,b*1 and L*2,a*2,b*2, the CIEDE2000 color difference between them is as follows:

$$\Delta E_{00}(L_1^*, a_1^*, b_1^*; L_2^*; L_2^*, a_2^*, b_2^*) = \Delta E_{00}^{12} = \Delta E_{00} \qquad (1)$$

It is noted that $\Delta E_{00}$is the commonly accepted notation for CIEDE2000.

Given two CIELAB color values $\{L_i^*, a_i^*, b_i^*\}_{i=1}^2$ and parametric weighting factors $k_L$, $k_c$, $k_H$, the process of computation of the color difference is summarized in the following equations, grouped as three main parts.

1. Calculate $C'_i$, $h'_i$ :

$$C_{i,ab}^* = \sqrt{((a_i^*)^2 + (b_i^*)^2)}, i = 1, 2 \qquad (2)$$

$$\bar{C}_{ab}^* = \frac{C_{1,ab}^* + C_{2,ab}^*}{2} \qquad (3)$$

$$G = 0.5\left(1 - \sqrt{\left(\frac{\bar{C}_{ab}^{*7}}{\bar{C}_{ab}^{*7} + 25^7}\right)}\right) \qquad (4)$$

$$a'_i = (1 + G)a_i^*, i = 1,2 \qquad (5)$$

$$C_i' = \sqrt{((a_i')^2 + (b_i')^2)}, i = 1, 2 \qquad (6)$$

$$h_i' = \begin{cases} 0 & b_i^* = a_i' = 0 \\ \tan^{-1}(b_i^*, a_i') & otherwise \end{cases}, i = 1,2 \qquad (7)$$

2. Calculate $\Delta L'$, $\Delta C'$, $\Delta H'$ :

$$\Delta L' = L_2^* - L_1^* \qquad (8)$$

$$\Delta C' = C_2^* - C_1^* \qquad (9)$$

$$\Delta h' = \begin{cases} 0 & C_1'C_2' = 0 \\ h_2' - h_1' & C_1'C_2' \neq 0;\ |h_2' - h_1'| \leq 180° \\ (h_2' - h_1') - 360 & C_1'C_2' \neq 0;\ (h_2' - h_1') > 180° \\ (h_2' - h_1') + 360 & C_1'C_2' \neq 0;\ (h_2' - h_1') < -180° \end{cases} \qquad (10)$$

$$\Delta H' = 2\sqrt{C_1'C_2'}\sin\left(\frac{\Delta h'}{2}\right) \qquad (11)$$

3. Calculate CIEDE2000 color-difference $\Delta E_{00}$:

$$\bar{L}' = (L_1^* + L_2^*)/_2 \qquad (12)$$

$$\bar{C}' = (C_1' + C_2')/_2 \qquad (13)$$

$$\bar{h}' = \begin{cases} \frac{h_1' + h_2'}{2} & |h_1' - h_2'| \leq 180°;\ C_1'C_2' \neq 0 \\ \frac{h_1' + h_2' + 360°}{2} & |h_1' - h_2'| > 180°;\ (h_1' + h_2') < 360°;\ C_1'C_2' \neq 0 \\ \frac{h_1' + h_2' - 360°}{2} & |h_1' - h_2'| > 180°;\ (h_1' + h_2') \geq 360°;\ C_1'C_2' \neq 0 \\ (h_1' + h_2') & C_1'C_2' = 0 \end{cases} \qquad (14)$$

$$T = 1 - 0.17\cos(\bar{h}' - 30°) + 0.24\cos(2\bar{h}') + 0.32\cos(3\bar{h}' + 6°) - 0.20\cos(4\bar{h}' - 63°) \qquad (15)$$

$$\Delta\theta = 30exp\left\{-\left[\frac{\bar{h}' - 275°}{25}\right]^2\right\} \qquad (16)$$

$$R_c = 2\sqrt{\left(\frac{\bar{C}'^7}{\bar{C}'^7 + 25^7}\right)} \qquad (17)$$

$$S_L = 1 + \frac{0.015(\bar{L}' - 50)^2}{\sqrt{(20 + (\bar{L}' - 50)^2)}} \qquad (18)$$

$$S_C = 1 + 0.045\bar{C}' \qquad (19)$$

$$S_H = 1 + 0.015\bar{C}'T \qquad (20)$$

$$R_T = -\sin(2\Delta\theta)\,R_C \qquad (21)$$

$$\Delta E_{00}^{12} = \Delta E_{00}(L_1^*, a_1^*, b_1^*; L_2^*;\ L_2^*, a_2^*, b_2^*) = \sqrt{\left(\left(\frac{\Delta L'}{k_L S_L}\right)^2 + \left(\frac{\Delta C'}{k_C S_C}\right)^2 + \left(\frac{\Delta H'}{k_H S_H}\right)^2 + R_T\left(\frac{\Delta C'}{k_C S_C}\right)\left(\frac{\Delta H'}{k_H S_H}\right)\right)} \qquad (22)$$

The results of the $\Delta E_{76}$ calculations and the $\Delta E_{00}$ calculations for each print generated on polyester are shown in Table 5.

**Table 5**

| Textile Fabric | Print / Pre-Treatment | Black Ink $\Delta E_{cie}$ | Black Ink $\Delta E_{2000}$ | Cyan Ink $\Delta E_{cie}$ | Cyan Ink $\Delta E_{2000}$ | Maqenta Ink $\Delta E_{cie}$ | Maqenta Ink $\Delta E_{2000}$ | Yellow Ink $\Delta E_{cie}$ | Yellow Ink $\Delta E_{2000}$ |
|---|---|---|---|---|---|---|---|---|---|
| Cotton | Baseline / No PT | 4.8 | 4.1 | 4.6 | 2.8 | 4.3 | 1.7 | 5.1 | 1.2 |
| | 1st Comp. Print / CE PT 1-0 | 8.2 | 6.8 | 5.3 | 3.2 | 5.6 | 2.6 | 5.5 | 1.3 |
| | 1st Ex. Print / Ex. PT 1-2 | 3.4 | 2.8 | 2.5 | 1.6 | 2.8 | 1.2 | N/A | N/A |
| | 2nd Ex. Print / Ex. PT 1-3 | 4.0 | 3.2 | 2.5 | 1.2 | 2.0 | 0.8 | 3.2 | 0.8 |
| | 2nd Comp. Print / CE PT 2-0 | 9.6 | 7.8 | 7.5 | 5.0 | N/A | N/A | N/A | N/A |
| | 3rd Ex. Print / Ex. PT 2-2 | 4.4 | 3.5 | 3.3 | 2.1 | N/A | N/A | N/A | N/A |
| | 4th Ex. Print / Ex. PT 2-3 | 4.5 | 3.6 | 2.1 | 1.4 | N/A | N/A | N/A | N/A |
| Polyester Cotton Blend | Baseline / No PT | 5.8 | 4.8 | 4.7 | 3.6 | 6.5 | 3.2 | 8.1 | 2.0 |
| | 1st Comp. Print / CE PT 1-0 | 9.2 | 7.5 | 5.3 | 4.1 | 6.9 | 3.5 | 7.9 | 1.8 |
| | 1st Ex. Print / Ex. PT 1-2 | 4.5 | 3.6 | 2.7 | 2.1 | 3.1 | 1.5 | N/A | N/A |
| | 2nd Ex. Print / Ex. PT 1-3 | 4.4 | 3.5 | 2.6 | 2.0 | 3.5 | 1.7 | 3.1 | 0.7 |
| | 2nd Comp. Print / CE PT 2-0 | 10.1 | 8.2 | 8.2 | 6.2 | N/A | N/A | N/A | N/A |
| | 3rd Ex. Print / Ex. PT 2-2 | 5.5 | 4.4 | 2.6 | 2.0 | N/A | N/A | N/A | N/A |
| | 4th Ex. Print / Ex. PT 2-3 | 5.4 | 4.3 | 3.2 | 2.5 | N/A | N/A | N/A | N/A |

These results illustrate that the comparative pre-treatment fluids with salt and no non-ionic blocked polyisocyanate (i.e., CE PT 1-0 and CE PT 2-0) deleteriously affected black, cyan, and magenta washfastness when compared with the example pre-treatment fluids with salt and the non-ionic blocked polyisocyanate (i.e., Ex. PT 1-2, Ex. PT 1-3, Ex. PT 2-2, and Ex. PT 2-3) on both textile substrates. Moreover, the washfastness of all of the colors on both textile substrates were improved with the example pre-treatment fluids (i.e., Ex. PT 1-2, Ex. PT 1-3, Ex. PT 2-2, and Ex. PT 2-3) when compared to the baseline prints that did not include any pre-treatment fluid.

*Color bleed*

To test color bleed, and in particular black ink to yellow ink bleed, the black and yellow inks were printed in particular patterns with yellow ink next to and/or between the black ink or as black text or yellow text (the latter of which is not visible in the reproductions presented as Figs. 3A and 3B). The patterns included black blocks B and yellow blocks Y, with thin yellow lines Y' or thin black lines B' extending through the blocks B or Y. The inks were printed and cured on the cotton/polyester blend (35/65) as described in this example, either with no pre-treatment fluid or with pre-treatment fluid Ex. PT 1-2 (6.34 wt% Ca(II) and 2 wt% of the non-ionic blocked polyisocyanate).

The bleed results for the comparative print printed without any pre-treatment fluid are shown in Fig. 3A (which is a black and white reproduction of the original colored photograph). The bleed results for the example print printed with the example pre-treatment fluid Ex. PT 1-2 are shown in Fig. 3B (which is a black and white reproduction of the original colored photograph). In both figures (i.e., in the black and white reproductions), the yellow ink (blocks Y and

lines Y') appears grey. When comparing the two figures, the bleed is most apparent at the skinny black lines B' and the skinny yellow lines Y' in Fig. 3A. Less bless, and thus improved bleed, was observed for the example print printed with the pre-treatment fluid.

It is to be understood that the ranges provided herein include the stated range and any value or sub-range within the stated range, as if the value(s) or sub-range(s) within the stated range were explicitly recited. For example, a range from about 25 seconds to about 18 minutes should be interpreted to include not only the explicitly recited limits of from about 25 seconds to about 18 minutes, but also to include individual values, such as about 32 seconds, about 3.5 minutes, about 5.2 minutes, etc., and sub-ranges, such as from about 2 minutes to about 4 minutes, etc. Furthermore, when "about" is utilized to describe a value, this is meant to encompass minor variations (up to +/- 10%) from the stated value.

Reference throughout the specification to "one example", "another example", "an example", and so forth, means that a particular element (e.g., feature, structure, and/or characteristic) described in connection with the example is included in at least one example described herein, and may or may not be present in other examples. In addition, it is to be understood that the described elements for any example may be combined in any suitable manner in the various examples unless the context clearly dictates otherwise.

In describing and claiming the examples disclosed herein, the singular forms "a", "an", and "the" include plural referents unless the context clearly dictates otherwise.

While several examples have been described in detail, it is to be understood that the disclosed examples may be modified. Therefore, the foregoing description is to be considered non-limiting.

## Claims

1. An inkjet pre-treatment fluid for textile printing, the inkjet pre-treatment fluid comprising:

   a fixing agent including a multivalent metal cation;
   a blocked polyisocyanate selected from the group consisting of a non-ionic blocked polyisocyanate, a cationic blocked polyisocyanate, and an anionic blocked polyisocyanate having an acid number less than about 5 mg KOH/g; and
   a liquid vehicle.

2. The inkjet pre-treatment fluid as defined in claim 1 wherein the multivalent metal cation is selected from the group consisting of calcium cations, magnesium cations, zinc cations, iron cations, aluminum cations, and combinations thereof.

3. The inkjet pre-treatment fluid as defined in claim 2 wherein the fixing agent comprises a metal salt and further includes anions selected from the group consisting of chloride anions, iodide anions, bromide anions, nitrate anions, carboxylate anions, sulfonate anions, sulfate anions, and combinations thereof.

4. The inkjet pre-treatment fluid as defined in claim 3 wherein the metal salt is present in an amount ranging from about 2 wt% to about 15 wt% based on a total weight of the pre-treatment fluid.

5. The inkjet pre-treatment fluid as defined in claim 1 wherein the blocked polyisocyanate is present in an amount ranging from about 0.2 wt% to about 15 wt% based on a total weight of the pre-treatment fluid.

6. The inkjet pre-treatment fluid as defined in claim 1 wherein the blocked polyisocyanate is the anionic blocked polyisocyanate, and the acid number is less than about 3 mg KOH/g.

7. The inkjet pre-treatment fluid as defined in claim 1 wherein the blocked polyisocyanate includes blocking groups selected from the group consisting of phenols, ε-caprolactam, butanone oxime, diethyl malonate, secondary amines, 1,2,4-triazoles, pyrazoles, and combinations thereof.

8. The inkjet pre-treatment fluid as defined in claim 1, further comprising an additive selected from the group consisting of a surfactant, a chelating agent, a buffer, a biocide, and combinations thereof.

9. The inkjet pre-treatment fluid as defined in claim 1 wherein the liquid vehicle includes water and a co-solvent.

10. A printing method, comprising:

inkjet printing an inkjet pre-treatment fluid onto a textile substrate, the inkjet pre-treatment fluid including:

a fixing agent including a multivalent metal cation;
a blocked polyisocyanate selected from the group consisting of a non-ionic blocked polyisocyanate, a cationic blocked polyisocyanate, and an anionic blocked polyisocyanate having an acid number less than 5 mg KOH/g; and
a liquid vehicle;

inkjet printing an inkjet ink onto the printed inkjet pre-treatment fluid to form an ink layer on the textile substrate, the inkjet ink including a pigment; and
curing the ink layer on the textile substrate.

**11.** The printing method as defined in claim 10 wherein curing the ink layer on the textile substrate is accomplished at a temperature ranging from about 80°C to about 200°C, for a period of time ranging from about 30 seconds to about 15 minutes.

**12.** The printing method as defined in claim 10 wherein the inkjet ink is printed onto the printed inkjet pre-treatment fluid while the pre-treatment fluid is wet.

**13.** The printing method as defined in claim 10 wherein a ratio of pre-treatment fluid printed to inkjet ink printed ranges from about 1:20 by volume to about 1:1 by volume.

**14.** The printing method as defined in claim 10 wherein the textile fabric is selected from the group consisting of polyester fabrics, polyester blend fabrics, cotton fabrics, cotton blend fabrics, nylon fabrics, nylon blend fabrics, silk fabrics, silk blend fabrics, and combinations thereof.

**15.** A liquid fluid set for inkjet printing onto a textile substrate, comprising:

an inkjet pre-treatment fluid, including:

a fixing agent including a multivalent metal cation;
a blocked polyisocyanate selected from the group consisting of a non-ionic blocked polyisocyanate, a cationic blocked polyisocyanate, and an anionic blocked polyisocyanate having an acid number less than 5 mg KOH/g; and
a liquid vehicle for the pre-treatment fluid; and

an inkjet ink, including:

a pigment dispersion;
a polymeric binder; and
a liquid vehicle for the inkjet ink.

## Patentansprüche

**1.** Tintenstrahlvorbehandlungsfluid für Textildruck, wobei das Tintenstrahlvorbehandlungsfluid Folgendes umfasst:

ein Fixiermittel, das ein mehrwertiges Metallkation beinhaltet;
ein blockiertes Polyisocyanat, das aus der Gruppe ausgewählt ist, die aus einem nichtionischen blockierten Polyisocyanat, einem kationischen blockierten Polyisocyanat und einem anionischen blockierten Polyisocyanat, das eine Säurezahl von weniger als etwa 5 mg KOH/g aufweist, besteht; und
eine flüssige Trägersubstanz.

**2.** Tintenstrahlvorbehandlungsfluid nach Anspruch 1, wobei das mehrwertige Metallkation aus der Gruppe ausgewählt ist, die aus Calciumkationen, Magnesiumkationen, Zinkkationen, Eisenkationen, Aluminiumkationen und Kombinationen davon besteht.

3. Tintenstrahlvorbehandlungsfluid nach Anspruch 2, wobei das Fixiermittel ein Metallsalz umfasst und ferner Anionen beinhaltet, die aus der Gruppe ausgewählt sind, die aus Chloridanionen, Iodidanionen, Bromidanionen, Nitratanionen, Carboxylatanionen, Sulfonatanionen, Sulfatanionen und Kombinationen davon besteht.

4. Tintenstrahlvorbehandlungsfluid nach Anspruch 3, wobei das Metallsalz in einer Menge in einem Bereich von etwa 2 Gew.-% bis etwa 15 Gew.-%, bezogen auf ein Gesamtgewicht des Vorbehandlungsfluids, vorhanden ist.

5. Tintenstrahlvorbehandlungsfluid nach Anspruch 1, wobei das blockierte Polyisocyanat in einer Menge in einem Bereich von etwa 0,2 Gew.-% bis etwa 15 Gew.-%, bezogen auf ein Gesamtgewicht des Vorbehandlungsfluids, vorhanden ist.

6. Tintenstrahlvorbehandlungsfluid nach Anspruch 1, wobei das blockierte Polyisocyanat das anionisch blockierte Polyisocyanat ist und die Säurezahl weniger als etwa 3 mg KOH/g beträgt.

7. Tintenstrahlvorbehandlungsfluid nach Anspruch 1, wobei das blockierte Polyisocyanat Blockierungsgruppen beinhaltet, die aus der Gruppe ausgewählt sind, die aus Phenolen, ε-Caprolactam, Butanonoxim, Diethylmalonat, sekundären Aminen, 1,2,4-Triazolen, Pyrazolen und Kombinationen davon besteht.

8. Tintenstrahlvorbehandlungsfluid nach Anspruch 1, das ferner ein Additiv umfasst, das aus der Gruppe ausgewählt ist, die aus einem Tensid, einem Chelatbildner, einem Puffer, einem Biozid und Kombinationen davon besteht.

9. Tintenstrahlvorbehandlungsfluid nach Anspruch 1, wobei die flüssige Trägersubstanz Wasser und ein Co-Lösungsmittel beinhaltet.

10. Druckverfahren, das Folgendes umfasst:

Tintenstrahldrucken eines Tintenstrahlvorbehandlungsfluids auf ein Textilsubstrat, wobei das Tintenstrahlvorbehandlungsfluid Folgendes beinhaltet:

ein Fixiermittel, das ein mehrwertiges Metallkation beinhaltet;
ein blockiertes Polyisocyanat, das aus der Gruppe ausgewählt ist, die aus einem nichtionischen blockierten Polyisocyanat, einem kationischen blockierten Polyisocyanat und einem anionischen blockierten Polyisocyanat, das eine Säurezahl von weniger als 5 mg KOH/g aufweist, besteht; und
eine flüssige Trägersubstanz;

Tintenstrahldrucken einer Tintenstrahltinte auf das gedruckte Tintenstrahlvorbehandlungsfluid, um eine Tintenschicht auf dem Textilsubstrat auszubilden, wobei die Tintenstrahltinte ein Pigment beinhaltet; und
Aushärten der Tintenschicht auf dem Textilsubstrat.

11. Druckverfahren nach Anspruch 10, wobei das Aushärten der Tintenschicht auf dem Textilsubstrat bei einer Temperatur in dem Bereich von etwa 80 °C bis etwa 200 °C für einen Zeitraum in dem Bereich von etwa 30 Sekunden bis etwa 15 Minuten erreicht wird.

12. Druckverfahren nach Anspruch 10, wobei die Tintenstrahltinte auf das gedruckte Tintenstrahlvorbehandlungsfluid gedruckt wird, während das Vorbehandlungsfluid nass ist.

13. Druckverfahren nach Anspruch 10, wobei ein Verhältnis von gedrucktem Vorbehandlungsfluid zu gedruckter Tintenstrahltinte in dem Bereich von etwa 1 : 20 bezogen auf das Volumen bis etwa 1 : 1 bezogen auf das Volumen liegt.

14. Druckverfahren nach Anspruch 10, wobei das Textilgewebe aus der Gruppe ausgewählt ist, die aus Polyestergeweben, Polyestermischgeweben, Baumwollgeweben, Baumwollmischgeweben, Nylongeweben, Nylonmischgeweben, Seidengeweben, Seidenmischgeweben und Kombinationen davon besteht.

15. Flüssigfluidsatz zum Tintenstrahldrucken auf ein Textilsubstrat, der Folgendes umfasst:

ein Tintenstrahlvorbehandlungsfluid, das Folgendes beinhaltet:

ein Fixiermittel, das ein mehrwertiges Metallkation beinhaltet;

ein blockiertes Polyisocyanat, das aus der Gruppe ausgewählt ist, die aus einem nichtionischen blockierten Polyisocyanat, einem kationischen blockierten Polyisocyanat und einem anionischen blockierten Polyisocyanat, das eine Säurezahl von weniger als 5 mg KOH/g aufweist, besteht; und
eine flüssige Trägersubstanz für das Vorbehandlungsfluid; und

eine Tintenstrahltinte, die Folgendes beinhaltet:

eine Pigmentdispersion;
ein Polymerbindemittel; und
eine flüssige Trägersubstanz für die Tintenstrahltinte.

## Revendications

1. Fluide de prétraitement par jet d'encre pour impression textile, le fluide de prétraitement par jet d'encre comprenant :

un agent de fixation comportant un cation métallique multivalent ;
un polyisocyanate bloqué choisi dans le groupe constitué d'un polyisocyanate bloqué non ionique, d'un polyisocyanate bloqué cationique et d'un polyisocyanate bloqué anionique ayant un indice d'acide inférieur à environ 5 mg de KOH/g ; et
un véhicule liquide.

2. Fluide de prétraitement par jet d'encre selon la revendication 1, dans lequel le cation métallique multivalent est choisi dans le groupe constitué de cations calcium, cations magnésium, cations zinc, cations fer, cations aluminium et leurs combinaisons.

3. Fluide de prétraitement par jet d'encre selon la revendication 2, dans lequel l'agent de fixation comprend un sel métallique et comporte en outre des anions choisis dans le groupe constitué d'anions chlorure, anions iodure, anions bromure, anions nitrate, anions carboxylates, anions sulfonate, anions sulfate, et leurs combinaisons.

4. Fluide de prétraitement par jet d'encre selon la revendication 3, dans lequel le sel métallique est présent en une quantité dans la plage d'environ 2 % en poids à environ 15 % en poids sur la base d'un poids total du fluide de prétraitement.

5. Fluide de prétraitement par jet d'encre selon la revendication 1, dans lequel le polyisocyanate bloqué est présent en une quantité dans la plage d'environ 0,2 % en poids à environ 15 % en poids sur la base d'un poids total du fluide de prétraitement.

6. Fluide de prétraitement par jet d'encre selon la revendication 1, dans lequel le polyisocyanate bloqué est le polyisocyanate bloqué anionique, et l'indice d'acide est inférieur à environ 3 mg de KOH/g.

7. Fluide de prétraitement par jet d'encre selon la revendication 1, dans lequel le polyisocyanate bloqué comporte des groupes de blocage choisis dans le groupe constitué de phénols, ε-caprolactame, butanone-oxime, malonate de diéthyle, amines secondaires, 1,2,4-triazoles, pyrazoles et leurs combinaisons.

8. Fluide de prétraitement par jet d'encre selon la revendication 1, comprenant en outre un additif choisi dans le groupe constitué d'un tensioactif, d'un agent chélatant, d'un tampon, d'un biocide et leurs combinaisons.

9. Fluide de prétraitement par jet d'encre selon la revendication 1, dans lequel le véhicule liquide comporte de l'eau et un co-solvant.

10. Procédé d'impression, comprenant :

l'impression à jet d'encre d'un fluide de prétraitement par jet d'encre sur un substrat textile, le fluide de prétraitement par jet d'encre comportant :

un agent de fixation comportant un cation métallique multivalent ;
un polyisocyanate bloqué choisi dans le groupe constitué d'un polyisocyanate bloqué non ionique, d'un

polyisocyanate bloqué cationique et d'un polyisocyanate bloqué anionique ayant un indice d'acide inférieur à 5 mg de KOH/g ; et
un véhicule liquide ;

l'impression à jet d'encre d'une encre pour jet d'encre sur le fluide de prétraitement par jet d'encre imprimé pour former une couche d'encre sur le substrat textile, l'encre pour jet d'encre comportant un pigment ; et
le durcissement de la couche d'encre sur le substrat textile.

**11.** Procédé d'impression selon la revendication 10, dans lequel le durcissement de la couche d'encre sur le substrat textile est réalisé à une température dans la plage d'environ 80 °C à environ 200 °C, pendant une période dans la plage d'environ 30 secondes à environ 15 minutes.

**12.** Procédé d'impression selon la revendication 10, dans lequel l'encre pour jet d'encre est imprimée sur le fluide de prétraitement par jet d'encre imprimé tandis que le fluide de prétraitement est humide.

**13.** Procédé d'impression selon la revendication 10, dans lequel un rapport du fluide de prétraitement imprimé à l'encre pour jet d'encre imprimé est dans la plage d'environ 1:20 en volume à environ 1:1 en volume.

**14.** Procédé d'impression selon la revendication 10, dans lequel le tissu textile est choisi dans le groupe constitué de tissus de polyester, de tissus de mélange de polyester, de tissus de coton, de tissus de mélange de coton, de tissus de nylon, de tissus de mélange de nylon, de tissus de soie, de tissus de mélange de soie et leurs combinaisons.

**15.** Ensemble fluide liquide pour l'impression à jet d'encre sur un substrat textile, comportant :

un fluide de prétraitement par jet d'encre, comportant :

un agent de fixation comportant un cation métallique multivalent ;
un polyisocyanate bloqué choisi dans le groupe constitué d'un polyisocyanate bloqué non ionique, d'un polyisocyanate bloqué cationique et d'un polyisocyanate bloqué anionique ayant un indice d'acide inférieur à 5 mg de KOH/g ; et
un véhicule liquide pour le fluide de prétraitement ; et

une encre pour jet d'encre, comportant :

une dispersion de pigments ;
un liant polymère ; et
un véhicule liquide pour l'encre pour jet d'encre.

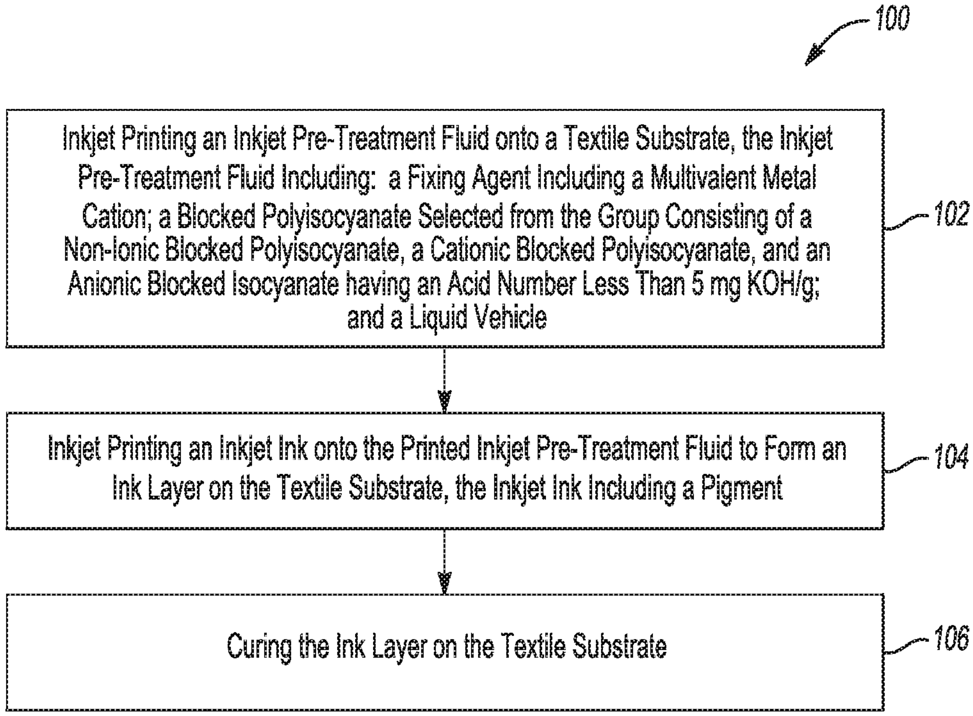
100
Inkjet Printing an Inkjet Pre-Treatment Fluid onto a Textile Substrate, the Inkjet Pre-Treatment Fluid Including: a Fixing Agent Including a Multivalent Metal Cation; a Blocked Polyisocyanate Selected from the Group Consisting of a Non-Ionic Blocked Polyisocyanate, a Cationic Blocked Polyisocyanate, and an Anionic Blocked Isocyanate having an Acid Number Less Than 5 mg KOH/g; and a Liquid Vehicle
102
Inkjet Printing an Inkjet Ink onto the Printed Inkjet Pre-Treatment Fluid to Form an Ink Layer on the Textile Substrate, the Inkjet Ink Including a Pigment
104
Curing the Ink Layer on the Textile Substrate
106

Fig-1

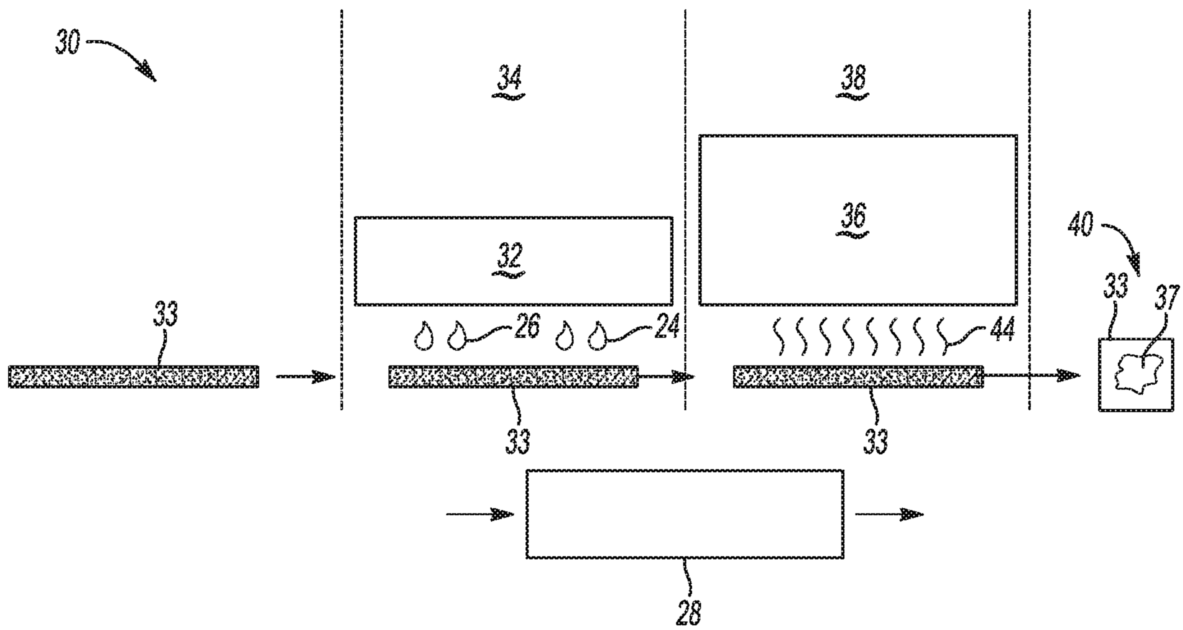
30
34
38
32
36
40
33
37
26
24
44
28

Fig-2

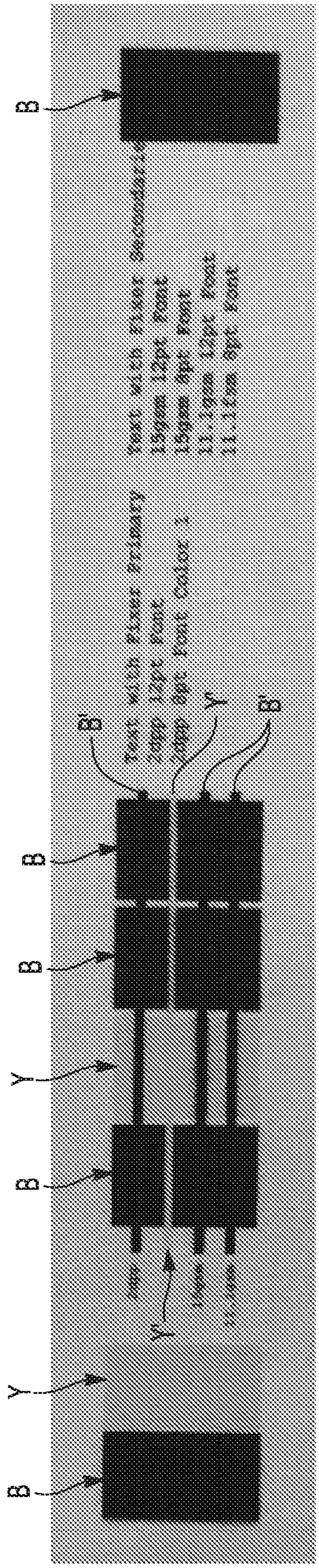


*Fig-3A*

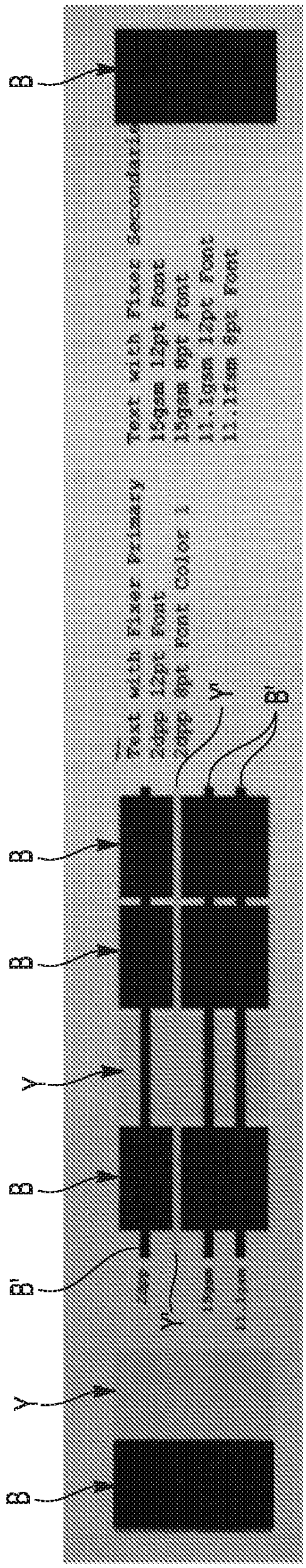


*Fig-3B*